# EUROPEAN PATENT APPLICATION

(11) **EP 3 165 791 A1**
(43) Date of publication of application: **10.05.2017**
(21) Application number: 16166844.7
(22) Date of filing: 25.04.2016
(51) Int. Cl.: F16H 3/00, F16H 3/12, F16H 3/72, F16H 57/04, F16H 37/04, F16H 61/04

(54) **MULTI-SPEED TORQUE FILLED TRANSMISSION**

(71) Applicant: AVL List GmbH, 8020 Graz (AT)
(72) Inventor: DAVYDOV, Vitaly, 8020 GRAZ (AT)
(74) Representative: Babeluk, Michael

(57) **Abstract**

A multi-speed torque filled transmission (10) especially for a vehicle, comprises a power split device (11) having at least a first link (11a), a second link (11b) and a third link (11c) with a negative speed ratio between the second link (11b) and the third link (11c) when the first link (11a) is stopped, An input shaft (12) of the transmission (10) is connected to the first link (11a) of said power split device (11) and to a driving shaft of a prime mover (18). A shiftable first sub-transmission (14) with a first driveshaft (20) and a shiftable second sub-transmission (15) with a second driveshaft (22), each of the sub-transmissions (14, 15) provides a plurality of different gear ratios, wherein the first driveshaft (20) of the first sub-transmission (14) is connected to the first link (11a) of said power split device (11). The second driveshaft (22) of the second sub-transmission (15) is connected to the second link (11b) of said power split device (11). An intermediate shaft (13), is kinematically connected to a driven shaft (21, 24) of said sub-transmissions (14, 15). A controllable lock-up clutch (CL) interconnects any two links (11a, 11b) of said power split device (11). A passive torque fill device (35) is kinematically connected to the third link (11c) of said power split device (11). The transmission (10) further comprises a planetary range changer (40) with a first input shaft (40a) and a second input shaft (40b), connected to an output shaft (50) with at least two different gear ratios, wherein said intermediate shaft (13) is connected to at least one of the input shafts of the planetary range changer (40). A bypass driveline kinematically connects one of the driveshafts of the sub-transmissions to at least another one of the input shafts of the range changer with fixed gear ratio via controllable bypass clutch.

## Description

The invention relates to a multi-speed torque filled transmission especially for a vehicle, comprising a power split device having at least a first link, a second link and a third link with a negative speed ratio between the second link and the third link when the first link is stopped, an input shaft of the transmission being connected to the first link of said power split device and being connected or connectable to a driving shaft of a prime mover, a first shiftable sub-transmission with a first driveshaft and a second shiftable sub-transmission with a second driveshaft, each of the sub-transmissions providing a plurality of different gear ratios, wherein the first driveshaft of the first sub-transmission is connected to the first link of said power split device, and the second driveshaft of the second sub-transmission is connected to the second link of said power split device, an intermediate shaft, kinematically connected to a driven shaft of said sub-transmissions, a controllable lock-up clutch interconnecting any two links of said power split device.

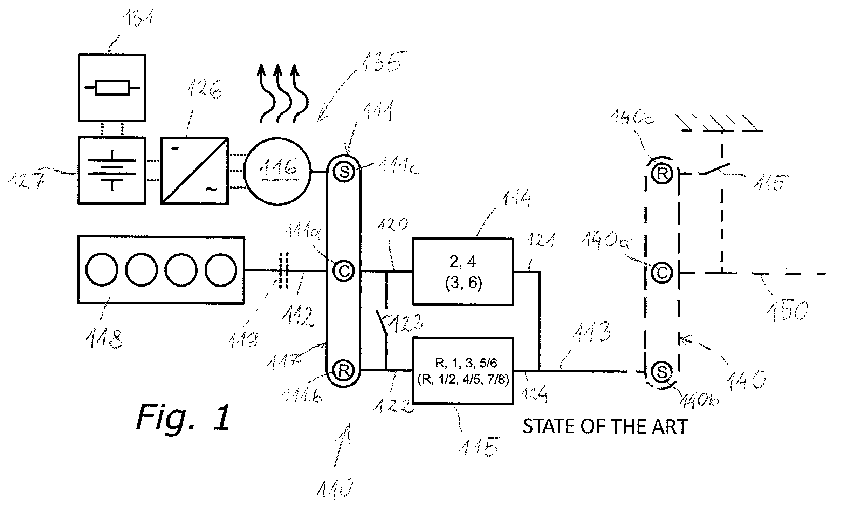

Fig. 1 shows such a multi-speed transmission according to the state of the art, disclosed in the European Patent application no. 14196899.0, and disclosed in the article "AVL Dynoshift - Low Cost Torque-Filled Transmission Concept", 14th International CTI Symposium, Automotive Transmissions, HEV and EV Drives, Berlin, 7-10 December 2015, ISSBN 978-3-9817822-0-2. The disadvantage of such a known lay-shaft architecture without range changer is that it does not suit well to heavy duty vehicles. The number of speeds and ratio spread is limited by the overall transmission length and shaft stiffness. An evident combination of the known passive torque filled transmission with a simple range changer downstream of the output shaft, e.g., 2-speed planetary range changer (which is indicated in Fig. 1 with broken lines) would increase ratio spread and reduce overall weight. However, there is no torque fill during range change, what is critical for target applications.

The document US 8,784,245 B2 describes a multi-speed transmission, especially for a vehicle, comprising an input shaft and two concentric driveshafts with plurality of gears on them. At least one driven shaft with a plurality of gears on it meshes with the gears on the, wherein the gears are engageable to said shafts with clutches, forming a powerflow from said driveshafts to the driven shafts with different ratios. A controllable lock-up clutch is arranged between two gears on said driveshafts, connecting said driving shafts with each other. A rotating electric machine is connected to a battery via a control system. An output shaft is arranged coaxial to said driveshafts and meshes constantly with the driven shafts via gearing. The output shaft is directly engageable to one of the driveshafts via a clutch. The transmission further comprises a planetary gearset with three links, wherein a first of said links is connected to the first driveshaft and the input shaft, a second link is connected to the second driveshaft, and a third link is kinematically connected to the rotor of said electric machine. The rotor of the electric machine is arranged coaxially to the driveshafts. The main disadvantage of this multi-speed transmission is mechanical complexity.

The U.S. patent No. 8,585,522 discloses a drive train with a combustion engine, an electric machine, and a transmission with first and second partial transmissions. The electric machine is coupled via a planetary transmission to input shafts of the first and second partial transmissions. The combustion engine can be coupled, via a separation clutch, to the input shaft of the second partial transmission and, when the separation clutch is engaged, the engine is also connected, via the planetary transmission, to the input shaft of the first partial transmission. A bridging shift element interacts with the planetary transmission such that, when the bridging shift element is engaged, the electric machine and the input shafts of the first and second partial transmissions are torsionally fixed so that they all rotate together. When the bridging shift element is disengaged, there is no torsionally fixed connection and those component rotate at different rotational speeds.

EP 1 625 037 B1 describes a transmission system with at last one transmission, an epicyclic gearing and a reactions means comprising a brake which can be appropriately activated such that more or less torque can be balanced.

The publication WO 2012/112028 A9 discloses a transmission system for a vehicle with a transmission module with a first sub-transmission and a second sub-transmission and a clutch module with a brake and a planetary gear set.

The transmission architectures disclosed in EP 1 625 037 B1 and WO 2012/112028 A9 have positive speed ratio, which makes impossible usage of a lock-up clutch in combination with single brake.

The object of the present invention is to provide a passive torque filled transmission with a range changer, which enables torque filling at all shifts, including range change.

According to the present invention this is achieved in that the transmission further comprises a planetary range changer with a first input shaft and a second input shaft, connected or connectable to an output shaft with at least two different gear ratios, wherein said intermediate shaft is connected or connectable to at least one of the input shafts of the range changer, and the transmission further comprises a bypass driveline, kinematically connecting one of the driveshafts of the sub-transmissions to at least another one of the input shafts of the range changer with fixed gear ratio via controllable bypass clutch.

A passive torque fill device is a rotary device which is capable of mechanical power absorption by braking. The passive torque fill device may be embodied as dry friction brake, wet friction brake, electric machine, eddy-current brake, hysteresis brake, viscous brake, hydrodynamic brake, powder brake, etc. The passive torque fill device may be arranged concentrically to the power split device and its rotor and may be directly connected to the first link of the power split device. This would be a preferred embodiment for a friction brake as passive torque fill device. Thus a reduced number of components, small weight and package may realized.

Alternatively the passive torque fill device may be arranged apart from the power split device and its rotor may be connected to the first link of the power split device via transmission. This would be a preferred embodiment for an electric machine as passive torque fill device. The advantages of this embodiment are reduced inertia of the rotating parts and simplified design of the cooling channels in the rotor.

A bypass driveline is a mechanical transmission with fixed gear ratio (preferably speed reducing or direct gear), connecting one of the driveshafts of the sub-transmissions to one of the input shafts of the range changer. A simultaneous connection of one of the sub-transmissions to one of the input shafts of the range changer and the bypass driveline to another one of the input shafts of the range changer enables seamless torque handover between high and low speed ranges of the transmission.

Such a configuration enables a compact, lightweight, low cost transmission which is torque filled at all shifts. Only one passive torque fill device (e.g. friction brake in basic embodiment) is necessary. All other coupling devices may be embodied as dog clutches or synchronizers. The passive torque fill device may be modified to extend transmission functions. For example, electric drive may be used instead of friction brake to add hybrid functions, to replace some of the synchronizers and to increase number of speeds by active torque fill function.

In contrast to known transmission architectures, e.g. disclosed in EP 1625037 B1 or WO 2012/112028 A9 the transmission according to the present invention comprises a lock-up clutch in combination with negative speed ratio between 2^{nd} and 3^{rd} links of the power split device. This approach doubles the number of gears which may be shifted by passive torque fill and reduces the number of active torque filled gearshifts. With a friction brake as power split device this leads to reduced number of mechanical components to provide same number of speeds.

According to a preferred design of the invention the prime mover may be embodied as an internal combustion engine with liquid cooling and the passive torque fill device is embodied as dry friction brake, wherein the static friction components of said brake comprise cooling channels, hydraulically connected to the cooling circuit of said internal combustion engine. A dry friction brake in open state is characterized with low drag torque. Water cooling of static parts is easily possible, because there are no rotary seals needed. Combining the cooling circuits of the brake and the engine simplifies overall powertrain design, wherein common cooler can be used.

Alternatively the passive torque fill device may be embodied as multi-plate wet friction brake, wherein the means of liquid cooling of the plates via transmission oil are provided. Wet brake is characterized by stable friction coefficient and simple cooling system, combined with the lubrication system of the transmission.

Alternatively the passive torque fill device may be embodied as hysteresis electric machine, wherein the rotor of said hysteresis electric machine comprises at least one channel for liquid cooling. An electric machine allows to convert braking power to electric power at least partly. With sufficient capacity of the inverter and/or battery active torque fill is enabled. Active torque fill enables additional transmission speeds with geometric gear steps. A hysteresis machine with rotor cooling enables passive torque fill with limited capacity of the inverter and/or battery. Additional hybrid functions are available: engine cranking, power generation, boosting. Synchronizers at least partly can be replaced by dog clutches, because the electric machine can actively synchronize (by up-speeding or down-speeding) the shafts during shifting of the second sub-transmission.

A hysteresis machine is an electric machine with a smooth rotor core of hard magnetic material, wherein the direction of rotor remanence magnetization can be reversed by the electromagnetic field from the stator. In detail a hysteresis machine is a synchronous electric machine, comprising a stator with windings and a non-salient rotor with a smooth core made of ferromagnetic material with high coercivity (>2000 A/m, preferably 24 000 A/m..160 000 A/m). Such a material is called hard magnetic material. The stator winding is able to create rotating electromagnetic field, linked with rotor core. The hysteresis machine with a control device form a hysteresis drive, wherein the combination of the machine design, control device power capacity and rotor core material coercivity should ensure changeability of rotor remanence magnetization by the electromagnetic field from the stator.

Active torque fill is provided by the torque fill device when it changes the direction of rotation with same direction of the torque. In this mode it works as a source of mechanical power, adding the power from the electric battery to the power of the prime mover. Friction brake can't operate in active torque fill mode.

According to very simple embodiments of the invention the first link of the power split device is a planet carrier, the second link is a ring gear, and the third link is a sun gear. The power split device has negative speed ratio between second and third links when first link is stopped.

Preferably each of the two sub-transmissions comprises a plurality of meshing cylindrical gears on parallel shafts, engaged to the shafts by dog clutches and/or synchronizers, wherein said intermediate shaft is arranged coaxial with the driveshafts of said sub-transmissions, and one of the speeds is provided by direct connection of one of the driveshafts to the intermediate shaft. This lay-shaft architecture is a simplest embodiment of the multi-speed sub-transmissions. The coaxial arrangement of the driveshafts and the intermediate shaft enables direct speed with highest possible efficiency. Direct speed is provided by connecting the second driveshaft to the intermediate shaft and engagement of the lock-up clutch. With this embodiment of the direct speed the next, overdrive speed can be activated by disengagement of the lock-up clutch and locking of the sun gear of the power split device. This overdrive speed is more efficient than in conventional mechanical transmissions with intermediate shaft, because speed multiplication is provided by planetary gearset with stopped sun gear instead of two cylindrical gearings in series.

According to a preferred embodiment of the invention the intermediate shaft is alternatively connectable to both input shafts of the range changer via controllable clutches, and the bypass driveline directly connects the first driveshaft to one of the input shafts of the range changer. In this way a high number of speeds is enabled with small number of shifting sleeves.

Alternatively to the first driveshaft the bypass driveline may directly connected to the second driveshaft of the second sub-transmission to one of the input shafts of the planetary range changer. Thus range changer lock-up at high range is enabled with small number of shifting sleeves. This lock-up reduces transmission drag losses.

According to another preferred embodiment of the invention the intermediate shaft is connected to one of the input shafts of the planetary range changer, and the bypass driveline connects the first driveshaft of the first sub-transmission to another input shaft of the planetary range changer, wherein the gear ratio of the bypass driveline exceeds highest gear ratio in both sub-transmissions. This embodiment enables highest number of speeds and range changer lock-up at high range with small number of shifting sleeves or small number of gearwheels.

The planetary range changer comprises at least one sun gear, at least one ring gear and at least one planet carrier. According to a preferred variant the sun gear of the planetary range changer is connected to the first input shaft of said planetary range changer, the ring gear of the planetary range changer is connected to the transmission housing, and the planet carrier of the planetary range changer is connected to the second input shaft of said planetary range changer and to the output shaft. Thus the simplest (non-shiftable) embodiment of the range changer may be realized. The range change is provided by selective connection of the sub-transmissions and the bypass driveline to the input shafts of the range changer.

At least one speed in at least one of the sub-transmissions may be a reverse speed. The reverse gear is provided by the sub-transmission. The range changer provides just high and low ranges.

According to a simple embodiment of the range changer the sun gear of the planetary range changer is connected to the first input shaft of said planetary range changer, the ring gear of the planetary range changer is alternatively connectable to the transmission housing and to the output shaft via controllable clutches, and the planet carrier of the planetary range changer is connected to the second input shaft of said planetary range changer and to the output shaft. This simple embodiment of the lockable range changer provides low and high ranges.

According to an advanced embodiment of the lockable range changer the sun gear of the planetary range changer is connected to the first input shaft of said planetary range changer, the ring gear of the planetary range changer is alternatively connectable to the transmission housing and to the output shaft via controllable clutches, and the planet carrier of the planetary range changer is connected to the second input shaft of said planetary range changer and is alternatively connectable to the transmission housing and to the output shaft via controllable clutches. The lockable range changer provides reverse, low and high ranges. Thus a high number of reverse speeds with simplified sub-transmissions may be realized.

The invention is explained below in closer detail by reference to the drawings, wherein:
Fig. 1 is a block diagram of a multi-speed transmission according to the state of the art;
Fig. 2 is a block diagram of a multi-speed transmission in accordance with a first embodiment of the invention;
Fig. 3 is a schematic illustration of a multi-speed transmission in accordance with the first embodiment of the invention with a wet brake;
Fig. 3a is a schematic illustration of a multi-speed transmission simila5r to Fig. 3 with a dry brake;
Fig. 4 is a block diagram of a multi-speed transmission in accordance with second and third embodiments of the invention;
Fig. 5 is a schematic illustration of a multi-speed transmission in accordance with the second and third embodiments of the invention;
Fig. 6 is a block diagram of a multi-speed transmission in accordance with a fourth embodiment of the invention;
Fig. 7 is a schematic illustration of a multi-speed transmission in accordance with the fourth embodiment of the invention;
Fig. 8 is a block diagram of a multi-speed transmission in accordance with fifth and sixth embodiments of the invention;
Fig. 9 is a schematic illustration of a multi-speed transmission in accordance with the fifth and sixth embodiments of the invention;
Fig. 10 is a block diagram of a multi-speed transmission in accordance with a seventh embodiment of the invention;
Fig. 11 is a schematic illustration of a multi-speed transmission in accordance with the seventh embodiment of the invention;
Fig. 12 is a block diagram of a multi-speed transmission in accordance with eight and ninth embodiments of the invention;
Fig. 13 is a schematic illustration of a multi-speed transmission in accordance with the eighth and ninth embodiments of the invention;
Fig. 14 is a block diagram of a multi-speed transmission in accordance with tenth or thirteenth embodiments of the invention;
Fig. 15 is a schematic illustration of a multi-speed transmission in accordance with the tenth embodiment of the invention;
Fig. 16 is a schematic illustration of a multi-speed transmission in accordance with the tenth or thirteenth embodiments of the invention;
Fig. 17 is a block diagram of a multi-speed transmission in accordance with eleventh, twelfth, fourteenth or fifteenth embodiments of the invention;
Fig. 18 is a schematic illustration of a multi-speed transmission in accordance with the eleventh or twelfth embodiments of the invention;
Fig. 19 is a schematic illustration of a multi-speed transmission in accordance with the fourteenth or fifteenth embodiments of the invention;
Fig. 20a to 20f show range changes of the multi-speed transmission in accordance with the first, second or third embodiment of the invention, and
Fig. 21a to 21g show range changes of the multi-speed transmission in accordance with the fourth, fifth, sixth, seventh, eighth or ninth embodiment of the invention.

Fig. 1 show a multi-speed transmission 110 for a vehicle according to the state of art. The known transmission 110 comprises a power split device 111 i.e. a planetary gear set 117, an input shaft 112, an intermediate shaft 113, a first shiftable sub-transmission 114 and a second shiftable sub-transmission 115, wherein each of the sub transmissions 114, 115 provides a plurality of different gear ratios. The transmission 110 further comprises a passive torque fill device 135, which is designed as a rotating electric machine 116, connected to the power split device 111. The driven shafts 121, 124 of the two sub-transmissions 114, 115 can be connected alternatively to an intermediate shaft 113. The electric machine 116 is electrically connected to a control system 126 and a battery 127. Reference number 131 indicates a braking resistor 131 electrically connectable to the battery 127. The power split device 111 is configured as a three-link planetary gear sets 117 with first link 111a, second links 111b and third link 111c. The input shaft 112 of the transmission 110 is connected to a prime mover 118. The input shaft 112 of the transmission 110 is engaged to the first link 111a or engageable to the first link 111a of the planetary gear set 117 via a switchable input clutch 119. The driveshaft 120 of the first sub-transmission 114 is engaged to the first link 111a. The driveshaft 122 of the second sub-transmission 115 is connected to the second link 111b. The electric machine 116 is connected to the third link 111c of the planetary gear set 117, wherein the speed ratio between the second link 111b and the third link 111c is negative for stopped first link 111a.

With a lockup clutch 123 between the first 111a and the third links 111c of the planetary gear set 117 additional gears may be provided by double use of the gearings in the second sub-transmission.

The number of speeds and ratio spread is limited by overall transmission length and shaft stiffness. An evident combination of the known passive torque filled transmission 110 with a simple range changer 140 downstream of the output shaft 113, e.g., a 2-speed planetary range changer 140 (which is indicated in Fig. 1 with dashed lines) would increase ratio spread and reduce overall weight. However, there is no torque fill during range change, what is critical for target applications. The planetary range changer 140 comprises a first link 140a, a second link 140b and a third link 140c, wherein the first link 140a is connected to an output shaft 150 and the second link connected to the intermediate shaft 113. The third link 140c can be either braked or connected to the first link 140a via a clutch 145.

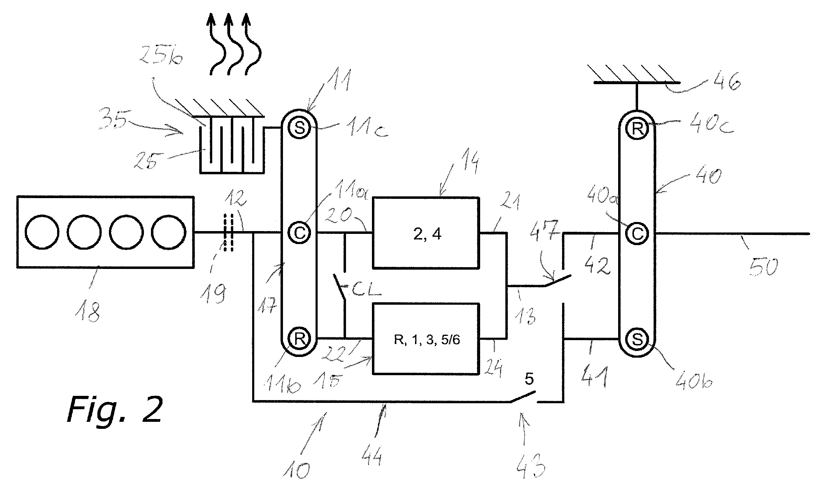

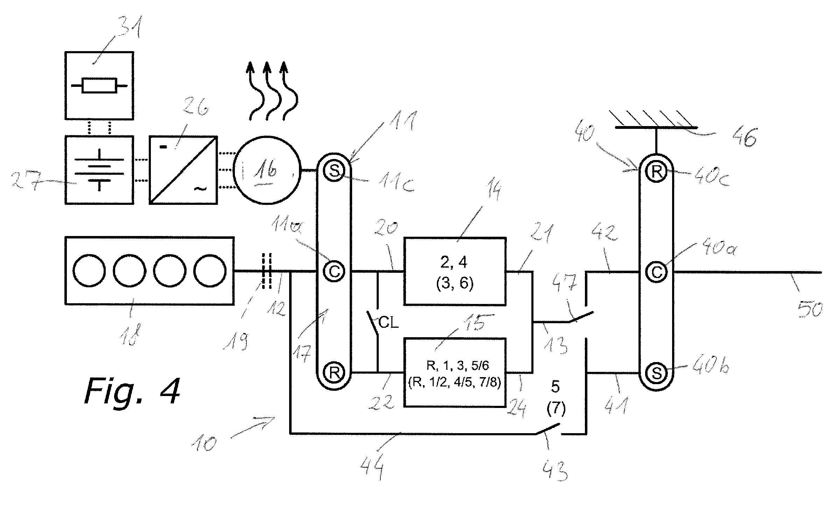

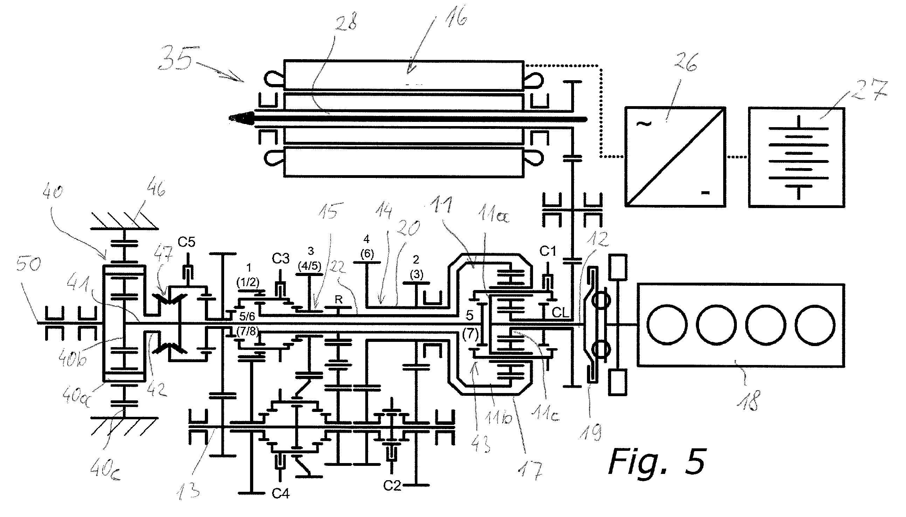

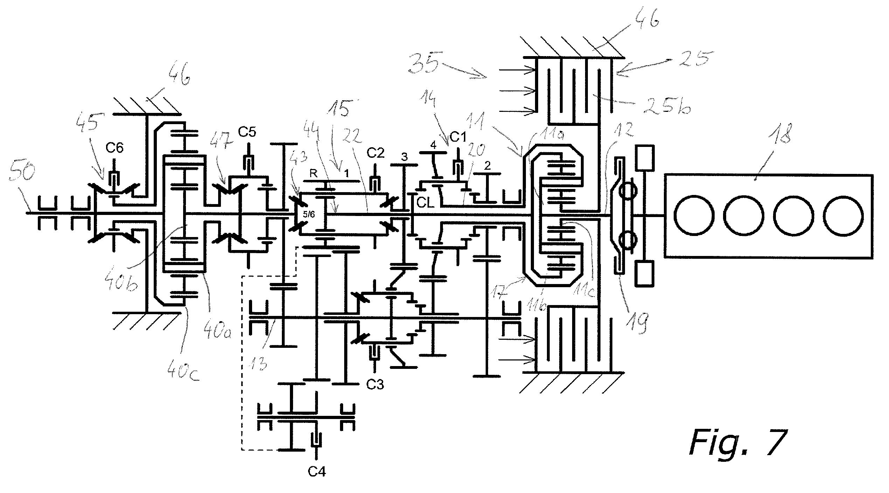

Figs. 2 to 19 each show multispeed transmissions 10 for a vehicle comprising a power split device 11, i.e. a planetary gear set 17, an input shaft 12, an output shaft 50, a shiftable first sub-transmission 14 and a shiftable second sub-transmission 15, wherein each of the sub transmissions 14, 15 provides a plurality of different gear ratios for speeds R, 1, 2, 3, 4, 5, 6, 7, 8. The transmission 10 further comprises a passive torque fill device 35, connected to the power split device 11. The passive torque fill device 35 may be designed as an electric machine 16 (Fig. 4, 5, 8, 9, 12, 13, 17, 18, 19).

More in detail the passive torque fill device 35 may be designed as an electric machine 16 with internal power dissipation capacity, e.g., may as multi-phase induction machine with squirrel cage inductor or as multi-phase hysteresis machine with a solid inductor of hard magnetic material. According to a brushless variant the inductor is a movable rotor, the armature is a fixed stator, and the windings of the armature are connected to the multi-phase bi-directional AC/DC power inverter via fixed electrical connection. Better cooling conditions are available with an immovable inductor being designed as a fixed stator; the armature is a movable rotor, and the windings of the armature are electrically connected to the multi-phase bi-directional AC/DC power inverter via sliding contact of brushes and rings. The inductor is capable of dissipating full mechanical brake power. The inductor may comprise means for forced cooling, e.g. at least one cooling passage for liquid cooling. The electric machine 16 is electrically connected to a control system 26 and a battery 27, e.g., a low-voltage battery. The control system 26 of the electric machine 16 may comprise a multi-phase bi-directional AC/DC power inverter. The braking power capacity of the electric machine 16 may exceed the power capacity of the multi-phase bi-directional AC/DC converter. The internal heat dissipation power of the electric machine 16 may be higher than the electric power flow through the control system 26 of the electric machine 16. For sufficient dissipation of power the rotor of said electric machine 16 may comprise at least one channel 28 for liquid cooling.

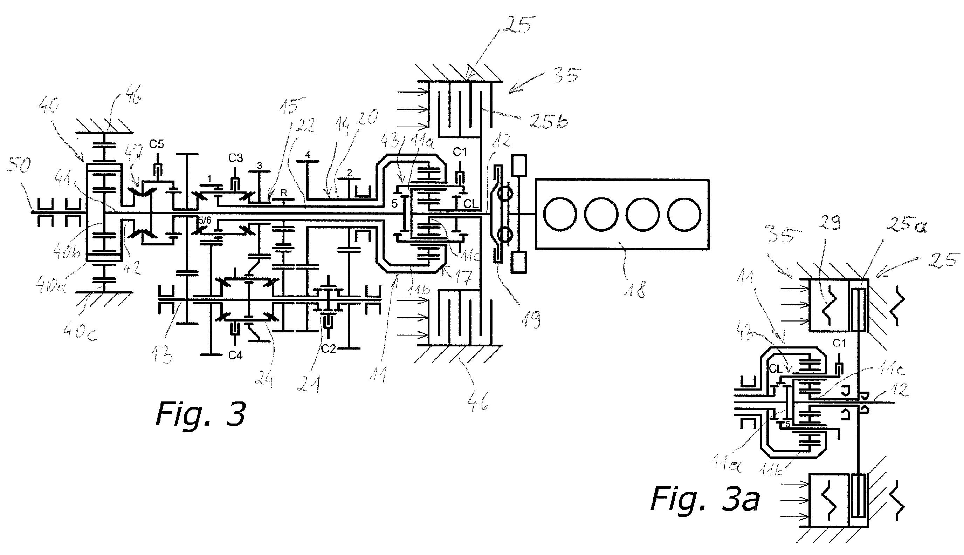

Alternatively to an electric machine the passive torque device 35 may be designed as a mechanic brake device 25 (Fig. 2, 3, 3a, 6, 7, 10, 11, 14, 15, 16), for example, a dry friction brake 25a (Fig. 3a), wherein the static friction components of said brake comprise cooling channels 29, hydraulically connected to the cooling circuit of said internal combustion engine. Instead of a dry friction brake the passive torque device 35 may be embodied as multi-plate wet friction brake 25b (Fig. 2, 3, 6, 7, 10, 11, 14, 15, 16), wherein the means of liquid cooling of the plates via transmission oil are provided.

Each of the Figs. 2 to 19 shows embodiments with power split devices 11 each of them being configured as a three-link planetary gear sets 17 with first links 11a, second links 11b and third links 11c. The input shaft 12 of the transmission 10 is connected to a prime mover 18, e.g. an internal combustion engine with liquid cooling.

The input shaft 12 of the transmission 10 is directly engaged to the first link 11a or is engageable to the first link 11a of the planetary gear set 17 via non-controllable input clutch 19, which acts as torque limiter or safety clutch. The passive torque fill device 35 is kinematically connected to the third link 11c of the planetary gear set 17, wherein the speed ratio between the second link 11b and the third link 11c is negative for stopped first link 11a. This embodiment is preferred for low-cost applications with reduced number of components.

The driven shafts 21, 24 of the two sub-transmissions 14, 15 can be connected alternatively to the intermediate shaft 13.

For example, the first link 11a of the power split device 11 may be a planet carrier C, the second link 11b a ring gear R and the third link 11c a sun gear C.

Optionally a controllable input clutch 19 can be arranged between the prime mover 18 and the planetary gear 17. The input shaft 12 of the transmission 10 is engageable to the first link 11a, via the separation input clutch 19. If the passive torque fill device 35 is designed as an electric machine 16, this connection enables electric drive modes of the vehicle, e.g. for hybrid applications.

With a lockup clutch CL between the first 11a and the second links 11b of the planetary gear set 17 additional gears may be provided by double use of the second sub-transmission 15.

The transmission 10 further comprises a planetary range changer 40 with a first input shaft 41 and a second input shaft 42, connected or connectable to an output shaft 50 with at least two different gear ratios. The planetary range changer 40 can be designed as planetary gear set with a first link 40a, a second link 40b and a third link 40c. For example, the first link 40a may be designed as a planet carrier gear C, the second link as a sun gear S and the third link as a ring gear R. The intermediate shaft 13 is connected or connectable to at least one of the input shafts 41, 42 of the planetary range changer 40. The transmission 10 further comprises a bypass driveline 44, kinematically connecting one of the drive shafts 20, 22 of the sub-transmissions 14, 15 to at least another one of the input shafts 42, 41 of the range changer 40 with fixed gear ratio via a controllable bypass clutch 43. is integrated into one of the clutch units, e.g. dual-sided dog clutch unit C1.

The intermediate shaft 13 is arranged coaxial with the driveshafts 20, 22 of said sub-transmissions 14, 15, and one of the speeds is provided by direct connection of one of the driveshafts 20, 22 to the intermediate shaft 13. Each of the two sub-transmissions 14, 15 comprises a plurality of meshing cylindrical gears on parallel shafts, engaged to the shafts by clutch units C2, C3, C4, which are designed as dog clutches and/or synchronizers.

The intermediate shaft 13 is alternatively connectable to both input shafts 41, 42 of the planetary range changer 40 via at least one controllable clutch 47. The controllable clutch 47 may be embodied as dual-sided synchronizer C5.

According to the embodiments first to third, the bypass driveline 44 directly connects the first driveshaft 20 of the first sub-transmission 14 to one of the input shafts 41, 42 of the planetary range changer 40 (Figs. 2 to 5).

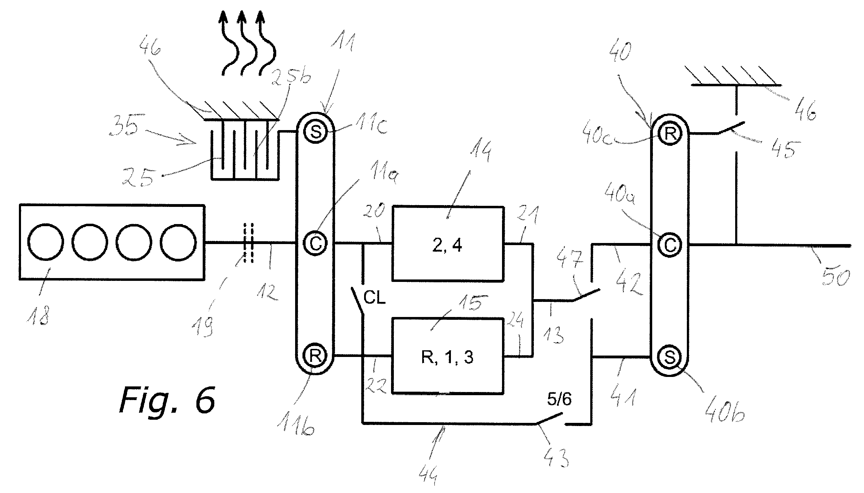

According to the embodiments fourth to ninth, the bypass driveline 44 directly connects the second drive shaft 22 of the second sub-transmission 15 to one of the input shafts 41, 42 of the planetary range changer 40 (Fig. 6 to 12).

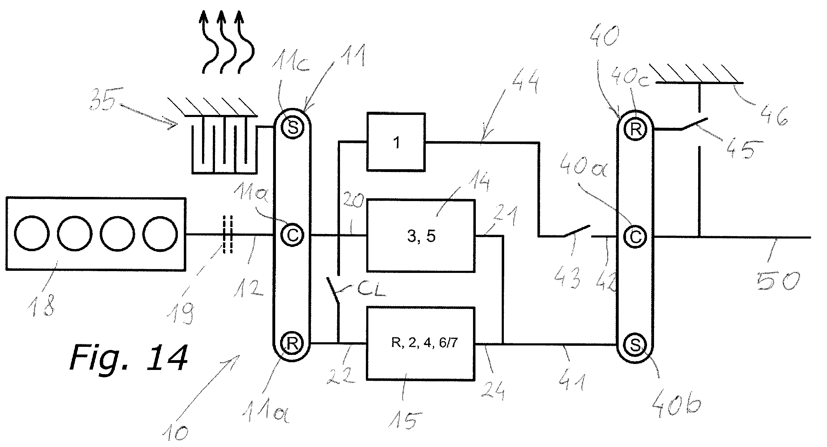

According to the embodiments tenth to fifteenth, the bypass driveline 44 connects the first driveshaft 20 of the first sub-transmission 14 to another input shaft 42, 41 of the planetary range changer 40, wherein the gear ratio of the bypass driveline 44 exceeds highest gear ratio in both sub-transmissions 14, 15 (Figs. 14 to 19).

The planetary range changer 40 comprises a sun gear S, a ring gear R and a planet carrier C.

For example, the sun gear S of the planetary range changer 40 is connected to the first input shaft 41 of said planetary range changer 40, the ring gear R of the planetary range changer 40 is connected to a transmission housing 46, and the planet carrier C of the planetary range changer 40 is connected to the second input shaft 42 of said planetary range changer 40 and to the output shaft 50 (Figs. 2 to 5). At least one speed in at least one of the sub-transmissions 14, 15 may be a reverse speed.

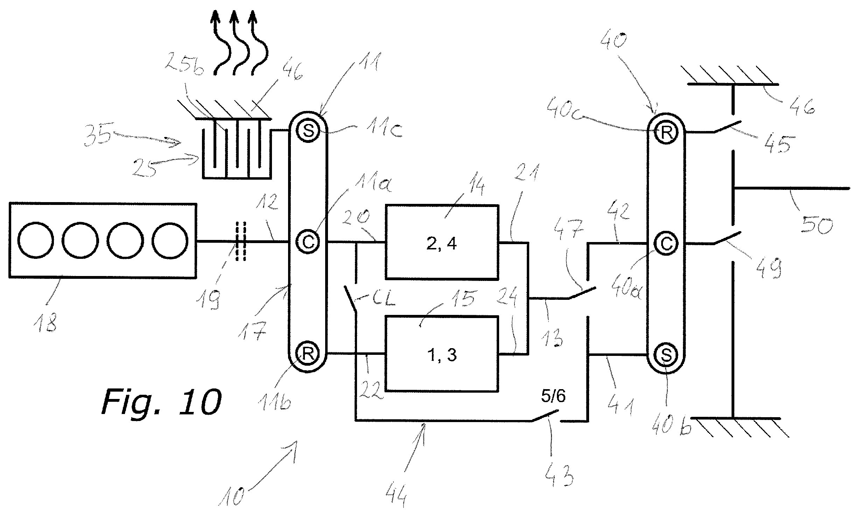

According to the other embodiments of the invention the sun gear S of the planetary range changer 40 is connected to the first input shaft 41 of said planetary range changer 40 and the ring gear R of the planetary range changer 40 is alternatively connectable to a transmission housing 46 and to the output shaft 50 via at least one controllable clutch 45 (Fig. 6 to 19). The controllable clutch 45 may be integrated to one of the clutch units, e.g. clutch unit C5 or C6. The planet carrier C of the planetary range changer 40 may be connected to the second input shaft 42 of the planetary range changer 40 and to the output shaft 50. Alternatively the planet carrier C of the planetary range changer 40 is connected to the second input shaft 42 of said planetary range changer 40 and is alternatively connectable to the transmission housing 46 and to the output shaft 50 via at least one controllable clutch 49 (Figs. 10 to 13).

The passive torque fill device 35 can be arranged concentrically to the power split device 11 and its rotor is directly connected to the first link 11a of the power split device 11 (Fig. 3, 3a, 7, 11, 15, 16). Alternatively the passive torque fill device 35 is arranged apart from the power split device 11 and its rotor is connected to the first link 11a of the power split device 11 via transmission.

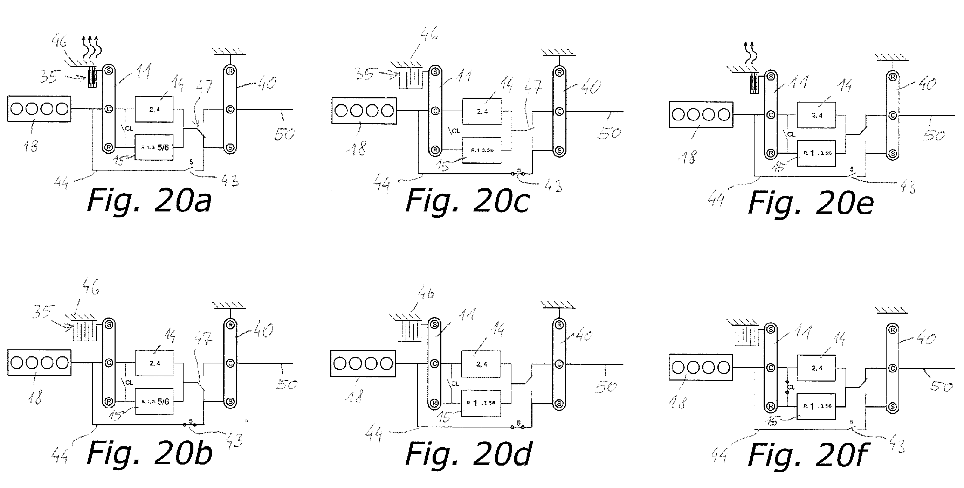

Figs. 20a to 20f show range changes of the multispeed transmission in accordance with the first, second or third embodiment of the invention.

Figs. 20a to 20f show range changes of the multispeed transmission in accordance with the fourth, fifth, sixth, seventh, eighth or ninth embodiment of the invention.

With reference to Figs. 3, 5, 7, 9, 11, 13, 15, 16 and 19 in the following tables "L" indicates a left side position (first position), and "RI" indicates a right side position (second position) of the dual sided shifting sleeves of the clutches C1, C2, C3, C4, C5, C6. In the left-side position of the shifting sleeves the clutches C1, C2, C3, C4, C5, C6 are engaged to the corresponding left side gear or an idle position, respectively. In the right-side position of the shifting sleeves the clutches C1, C2, C3, C4, C5, C6 are engaged to the corresponding right side gear or an idle position, respectively. "S" indicates synchronization of the corresponding clutch. "X" indicates a closed position of a corresponding single sided clutch.

### Embodiment 1 (Fig. 2, 3, Fig. 20a - 20f)

Shifting table of 1^{st} embodiment of the invention (friction brake, eleven forward gears, two reverse gears R1, R2):

| **Transmission speed (operation mode)** | **Gear ratio (example)** | **Brake operation mode** | **C1 (43)** | **C2** | **C3** | **C4** | **C5 (47)** |
|---|---|---|---|---|---|---|---|
| R2 | -9,65 | Locked | | | | RI | RI |
| R1 - R2 gearshift | -9,65 ... - 12,81 | Braking (passive torque fill) | | | | RI | RI |
| R1 | -12,81 | Open, medium speed | L | | | RI | RI |
| Reverse driveaway | -12,81 ... ∞ | Braking | | | | RI | RI |
| N | ∞ | Open | L | | | S | RI |
| Forward driveaway | ∞ ... 12,81 | Braking | | | | L | RI |
| 1st | 12,81 | Open, medium speed | L | | | L | RI |
| 1st - 2nd gearshift | 12,81 ... 9,65 | Braking (passive torque fill) | | | | L | RI |
| 2nd, 1st preselected | 9,65 | Open, stopped | | RI | | L | RI |
| 2nd, doing preselection | 9,65 | Open or synchronizer assistance (for downshift) | | RI | S | S | RI |
| 2nd, 3rd preselected | 9,65 | Open, high speed | | RI | RI | | RI |
| 2nd- 3rd gearshift | 9,65 ... 7,27 | Braking (passive torque fill) | | | RI | | RI |
| 3rd | 7,27 | Open, medium speed | L | | RI | | RI |
| 3rd - 4th gearshift | 7,27 ... 5,47 | Braking (passive torque fill) | | | RI | | RI |
| 4th, 3rd preselected | 5,47 | Open, stopped | | L | RI | | RI |
| 4th, doing preselection | 5,47 | Open or synchronizer assistance (for downshift) | | L | S | | RI |
| 4th, 5th preselected | 5,47 | Open, high speed | | L | L | | RI |
| *4th - 5th gearshift* (*Fig*. *20a**)* | *5,47 ... 4,12* | *Braking (passive torque fill)* | | | *L* | | *RI* |
| *5th (bypass), low range and 5th speed preselected* (*Fig*. *20b**)* | *4,12* | *Open, medium speed* | *RI* | | *L* | | *RI* |
| *5th (bypass), doing range change and speed preselection* (*Fig*. *20c**)* | *4,12* | *Open or synchronizer assistance (for downshift)* | *RI* | | *S* | *S* | *S* |
| *5th (bypass), high range and 1st speed preselected* (*Fig*. *20d**)* | *4,12* | *Open, high speed* | *RI* | | | *L* | *L* |
| *5th - 6th gearshift* (*Fig*. *20e**)* | *4,12 ... 3,11* | *Braking (passive torque fill)* | | | | *L* | *L* |
| *6^{th}* (*Fig*. *20f**)* | *3,11* | *Open, medium speed* | *L* | | | *L* | *L* |
| 6th - 7th gearshift | 3,11 ... 2,34 | Braking (passive torque fill) | | | | L | L |
| 7th, 6th preselected | 2,34 | Open, medium speed | | RI | | L | L |
| 7th, doing preselection | 2,34 | Open or synchronizer assistance (for downshift) | | RI | S | S | L |
| 7th, 6th preselected | 2,34 | Open, high speed | | RI | RI | | L |
| 7th - 8th gearshift | 2,34 ... 1,76 | Braking (passive torque fill) | | | RI | | L |
| 8th | 1,76 | Open, medium speed | L | | RI | | L |
| 8th - 9th gearshift | 1,76 ... 1,33 | Braking (passive torque fill) | | | RI | | L |
| 9th, 8th preselected | 1,33 | Open, medium speed | | L | RI | | L |
| 9th, doing preselection | 1,33 | Open or synchronizer assistance (for downshift) | | L | S | | L |
| 9th, 10th preselected | 1,33 | Open, high speed | | L | L | | L |
| 9th - 10th gearshift | 1,33 ... 1 | Braking (passive torque fill) | | | L | | L |
| 10th | 1,00 | Open, medium speed | L | | L | | L |
| 10th - 11th gearshift | 1 ... 0,75 | Braking (passive torque fill) | | | L | | L |
| 11th | 0,75 | Locked | | | L | | L |

### Embodiment 2 (Fig. 4 - 5)

Shifting table of 2nd embodiment of the invention (electric machine brake MGB, eleven forward gears, two reverse gears R1, R2):

| **Transmission speed (operation mode)** | **Gear ratio (example)** | **MGB operation mode** | **C1 (43)** | **C2** | **C3** | **C4** | **C5 (47)** |
|---|---|---|---|---|---|---|---|
| R2 | -9,65- | Power generation, low speed | | | | RI | RI |
| R1 - R2 gearshift | -9,65 ... - 12,81 | Braking (passive torque fill) | | | | RI | RI |
| R1 | -12,81 | Boosting/Power generation/Retarding, medium speed | L | | | RI | RI |
| Reverse driveaway | -12,81 ... ∞ | Braking | | | | RI | RI |
| N | ∞ | Power generation | L | | | | RI |
| Engine cranking (wheel brakes or park lock applied) | ∞ | Driving | | | | L | RI |
| Forward driveaway | ∞ ... 12,81 | Braking | | | | L | RI |
| 1st | 12,81 | Boosting/Power generation/Retarding, medium speed | L | | | L | RI |
| 1st - 2nd gearshift | 12,81 ... 9,65 | Braking (passive torque fill) | | | | L | RI |
| 2nd, 1st preselected | 9,65 | Stopped | | RI | | L | RI |
| 2nd, doing preselection | 9,65 | Shaft speed synchronization | | RI | | | RI |
| 2nd, 3rd preselected | 9,65 | Boosting/Power generation/Retarding, high speed | | RI | RI | | RI |
| 2nd- 3rd gearshift | 9,65 ... 7,27 | Braking (passive torque fill) | | | RI | | RI |
| 3rd | 7,27 | Boosting/Power generation/Retarding, medium speed | L | | RI | | RI |
| 3rd - 4th gearshift | 7,27 ... 5,47 | Braking (passive torque fill) | | | RI | | RI |
| 4th, 3rd preselected | 5,47 | Stopped | | L | RI | | RI |
| 4th, doing preselection | 5,47 | Shaft speed synchronization | | L | | | RI |
| 4th, 5th preselected | 5,47 | Boosting/Power generation/Retarding, high speed | | L | L | | RI |
| 4th - 5th gearshift | 5,47 ... 4,12 | Braking (passive torque fill) | | | L | | RI |
| 5th (bypass), low range and 4th speed preselected | 4,12 | Boosting/Power generation/Retarding, medium speed | RI | | L | | RI |
| 5th (bypass), doing range change and speed preselection | 4,12 | Shaft speed synchronization | RI | | | | S |
| 5th (bypass), high range and 1st speed preselected | 4,12 | Boosting/Power generation/Retarding, high speed | RI | | | L | L |
| 5th - 6th gearshift | 4,12 ... 3,11 | Braking (passive torque fill) | | | | L | L |
| 6th | 3,11 | Boosting/Power generation/Retarding, medium speed | L | | | L | L |
| 6th - 7th gearshift | 3,11 ... 2,34 | Braking (passive torque fill) | | | | L | L |
| 7th, 6th preselected | 2,34 | Stopped | | RI | | L | L |
| 7th, doing preselection | 2,34 | Shaft speed synchronization | | RI | | | L |
| 7th, 6th preselected | 2,34 | Boosting/Power generation/Retarding, high speed | | RI | RI | | L |
| 7th - 8th gearshift | 2,34 ... 1,76 | Braking (passive torque fill) | | | RI | | L |
| 8th | 1,76 | Boosting/Power generation/Retarding, medium speed | L | | RI | | L |
| 8th - 9th gearshift | 1,76 ... 1,33 | Braking (passive torque fill) | | | RI | | L |
| 9th, 8th preselected | 1,33 | Stopped | | L | RI | | L |
| 9th, doing preselection | 1,33 | Shaft speed synchronization | | L | | | L |
| 9th, 10th preselected | 1,33 | Boosting/Power generation/Retarding, high speed | | L | L | | L |
| 9th - 10th gearshift | 1,33 ... 1 | Braking (passive torque fill) | | | L | | L |
| 10th | 1,00 | Boosting/Power generation/Retarding, medium speed | L | | L | | L |
| 10th - 11th gearshift | 1 ... 0,75 | Braking (passive torque fill) | | | L | | L |
| 11th | 0,75+ | Power generation, low speed | | | L | | L |

### Embodiment 3 (Fig. 4 - 5)

Shifting table of 3^{rd} embodiment of the invention (electric machine brake MGB, fifteen forward gears, two reverse gears R1, R2):

| **Transmission speed (operation mode)** | **Gear ratio (example)** | **MGB operation mode** | **C1 (43)** | **C2** | **C3** | **C4** | **C5 (47)** |
|---|---|---|---|---|---|---|---|
| R2 | -11,34- | Power generation, low speed | | | | RI | RI |
| R1 - R2 gearshift | -11,34 ... - 13,89 | Braking (passive torque fill) | | | | RI | RI |
| R1 | -13,89 | Boosting/Power generation/Retarding, medium speed | L | | | RI | RI |
| Reverse driveaway | -13,89 ... ∞ | Braking | | | | RI | RI |
| N | ∞ | Power generation | L | | | | RI |
| Engine cranking (wheel brakes or park lock applied) | ∞ | Driving | | | | L | RI |
| Forward driveaway | ∞ ... 13,89 | Braking | | | | L | RI |
| 1st | 13,89 | Boosting/Power generation/Retarding, medium speed | L | | | L | RI |
| 1st - 2nd gearshift | 13,89 ... 11,34 | Braking (passive torque fill) | | | | L | RI |
| 2nd | 11,34+ | Power generation, low speed | | | | L | RI |
| 2nd - 3rd gearshift | 11,34 ... 9,26 | Driving at negative speed (active torque fill) | | | | L | RI |
| 3rd, 2nd preselected | 9,26 | Boosting/Power generation/Retarding, medium negative speed | | RI | | L | RI |
| 3rd, doing preselection | 9,26 | Shaft speed synchronization | | RI | | | RI |
| 3rd, 4th preselected | 9,26 | Boosting/Power generation/Retarding, high speed | | RI | RI | | RI |
| 3rd - 4th gearshift | 9,26 ... 7,57 | Braking (passive torque fill) | | | RI | | RI |
| 4th | 7,57 | Boosting/Power generation/Retarding, medium speed | L | | RI | | RI |
| 4th - 5th gearshift | 7,57 ... 6,18 | Braking (passive torque fill) | | | RI | | RI |
| 5th | 6,18+ | Power generation, low speed | | | RI | | RI |
| 5th - 6th gearshift | 6,18 ... 5,05 | Driving at negative speed (active torque fill) | | | RI | | RI |
| 6th, 5th preselected | 5,05 | Boosting/Power generation/Retarding, medium negative speed | | L | RI | | RI |
| 6th, doing preselection | 5,05 | Shaft speed synchronization | | L | | | RI |
| 6th, 7th preselected | 5,05 | Boosting/Power generation/Retarding, high speed | | L | L | | RI |
| 6th - 7th gearshift | 5,05 ... 4,12 | Braking (passive torque fill) | | | L | | RI |
| 7th (bypass), low range and 6th speed preselected | 4,12 | Boosting/Power generation/Retarding, medium speed | RI | | L | | RI |
| 7th (bypass), doing range change and speed preselection | 4,12 | Shaft speed synchronization | RI | | | | S |
| 7th (bypass), high range and 1st speed preselected | 4,12 | Boosting/Power generation/Retarding, high speed | RI | | | L | L |
| 7th- 8th gearshift | 4,12 ... 3,37 | Braking (passive torque fill) | | | | L | L |
| 8th | 3,37 | Boosting/Power generation/Retarding, medium speed | L | | | L | L |
| 8th - 9th gearshift | 3,37 ... 2,75 | Braking (passive torque fill) | | | | L | L |
| 9th | 2,75+ | Power generation, low speed | | | | L | L |
| 9th - 10th gearshift | 2,75 ... 2,25 | Driving at negative speed (active torque fill) | | | | L | L |
| 10th, 9th preselected | 2,25 | Boosting/Power generation/Retarding, medium negative speed | | RI | | L | L |
| 10th, doing preselection | 2,25 | Shaft speed synchronization | | R | | | L |
| 10th, 11th preselected | 2,25 | Boosting/Power generation/Retarding, high speed | | RI | RI | | L |
| 10th - 11th gearshift | 2,25 ... 1,84 | Braking (passive torque fill) | | | RI | | L |
| 11th | 1,84 | Boosting/Power generation/Retarding, medium speed | L | | RI | | L |
| 11th - 12th gearshift | 1,84 ... 1,5 | Braking (passive torque fill) | | | RI | | L |
| 12th | 1,50+ | Power generation, low speed | | | RI | | L |
| 12th - 13th | 1,5 ... 1,22 | Driving at negative speed (active torque fill) | | | R | | L |
| 13th, 12th preselected | 1,22 | Boosting/Power generation/Retarding, medium negative speed | | L | RI | | L |
| 13th, doing preselection | 1,22 | Shaft speed synchronization | | L | | | L |
| 13th, 14th preselected | 1,22 | Boosting/Power generation/Retarding, high speed | | L | L | | L |
| 13th- 14th gearshift | 1,22 ... 1 | Braking (passive torque fill) | | | L | | L |
| 14th | 1,00 | Boosting/Power generation/Retarding, medium speed | L | | L | | L |
| 14th - 15th gearshift | 1 ... 0,82 | Braking (passive torque fill) | | | L | | L |
| 15th | 0,82+ | Power generation, low speed | | | L | | L |

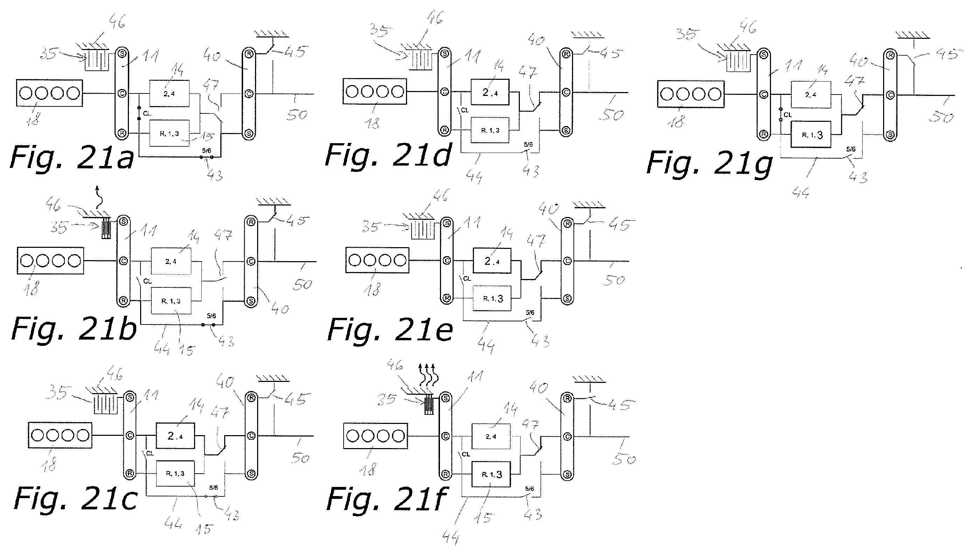

### Embodiment 4 (Fig. 6, 7, 21a - 21g)

Shifting table of 4th embodiment of the invention (friction brake, ten forward gears, two reverse gears R1, R2):

| **Transmission speed (operation mode)** | **Gear ratio (example)** | **Brake operation mode** | **C1** | **C2 (43)** | **C3** | **C4** | **C5 (47)** | **C6 (45)** |
|---|---|---|---|---|---|---|---|---|
| R2 | -9,06 | Locked | | | | X | RI | RI |
| R1 - R2 gearshift | -9,06 ... - 12,41 | Braking (passive torque fill) | | | | X | RI | RI |
| R1 | -12,41 | Open, medium speed | L | | | X | RI | RI |
| Reverse driveaway | -12,41 ... ∞ | Braking | | | | X | RI | RI |
| N | ∞ | Open | | | S | | RI | RI |
| Forward driveaway | ∞ ... 12,41 | Braking | | | L | | RI | RI |
| 1st | 12,41 | Open, medium speed | L | | L | | RI | RI |
| 1st - 2nd gearshift | 12,41 ... 9,06 | Braking (passive torque fill) | | | L | | RI | RI |
| 2nd, 1st preselected | 9,06 | Open, stopped | RI | | L | | RI | RI |
| 2nd, doing preselection | 9,06 | Open or synchronizer assistance (for downshift) | RI | S | S | | RI | RI |
| 2nd, 3rd preselected | 9,06 | Open, high speed | RI | RI | | | RI | RI |
| 2nd - 3rd gearshift | 9,06 ... 6,61 | Braking (passive torque fill) | | RI | | | RI | RI |
| 3rd | 6,61 | Open, medium speed | L | RI | | | RI | RI |
| 3rd - 4th gearshift | 6,61 ... 4,83 | Braking (passive torque fill) | | RI | | | RI | RI |
| 4th, 3rd preselected | 4,83 | Open, stopped | | RI | RI | | RI | RI |
| 4th, doing preselection | 4,83 | Open or synchronizer assistance (for downshift) | | S | RI | | RI | RI |
| 4th, 5th preselected | 4,83 | Open, high speed | | L | RI | | RI | RI |
| 4th - 5th gearshift | 4,83 ... 3,52 | Braking (passive torque fill) | | L | | | RI | RI |
| *5^{th} (**Fig*. *21a**)* | *3,52* | *Open, medium speed* | *L* | *L* | | | *RI* | RI |
| *5th - 6th gearshift, range change* (*Fig*. *21b**)* | *3,52* ... *2,57* | *Braking (passive torque fill)* | | *L* | | | *S* | RI |
| *6th, (low range 6th plus high range 2nd) (**Fig. 21c**)* | *2,57* | *Open, stopped* | *RI* | *L* | | | *L* | RI |
| *6th, doing speed preselection* (*Fig*. *21d**)* | *2,57* | *Open or synchronizer assistance (for downshift)* | *RI* | *S* | | | *L* | RI |
| *6th, (high range 3rd plus high range 2nd)* (*Fig*. *21e**)* | *2,57* | *Open, high speed* | *RI* | *RI* | | | *L* | RI |
| *6th - 7th gearshift, locking range changer* (*Fig*. *21f**)* | *2,57 ... 1,88* | *Braking (passive torque fill)* | | *RI* | | | *L* | S |
| *7^{th}* (*Fig*. *21g*) | *1,88* | *Open, medium speed* | *L* | *RI* | | | *L* | L |
| 7th - 8th gearshift | 1,88 ... 1,37 | Braking (passive torque fill) | | RI | | | L | L |
| 8th, 7th preselected | 1,37 | Open, stopped | | RI | RI | | L | L |
| 8th, doing preselection | 1,37 | Open or synchronizer assistance (for downshift) | | S | RI | | L | L |
| 8th, 9th preselected | 1,37 | Open, high speed | | L | RI | | L | L |
| 8th - 9th gearshift | 1,37 ... 1 | Braking (passive torque fill) | | L | | | L | L |
| 9th | 1,00 | Open, medium speed | L | L | | | L | L |
| 9th - 10th gearshift | 1 ... 0,73 | Braking (passive torque fill) | | L | | | L | L |
| 10th | 0,73 | Locked | | L | | | L | L |

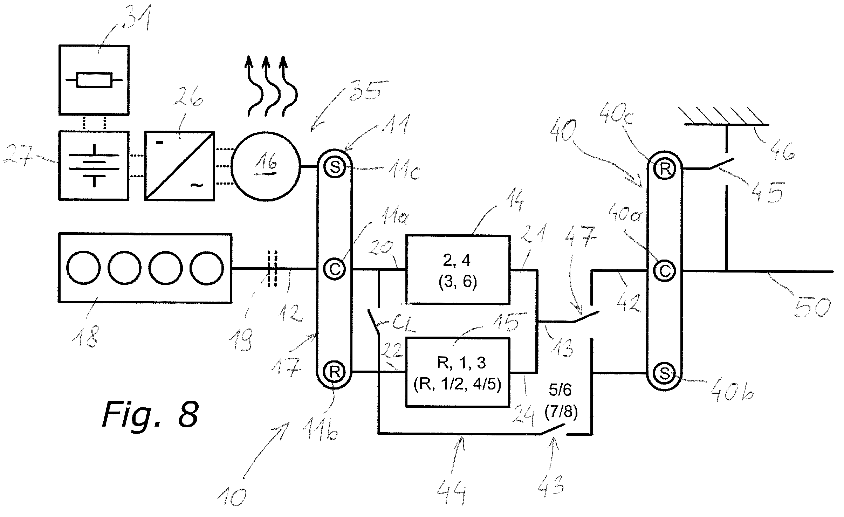

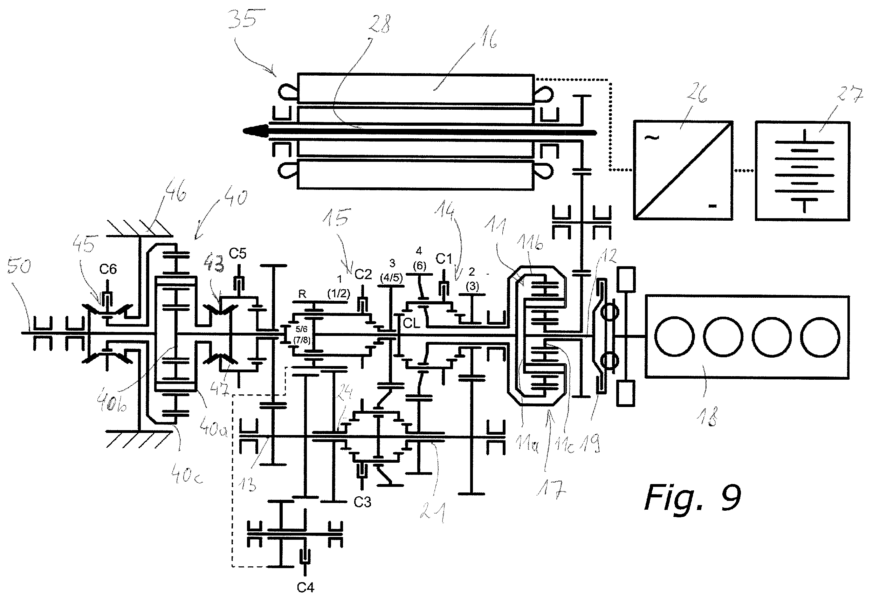

### Embodiment 5 (Fig. 8, 9)

Shifting table of 5th embodiment of the invention (electric machine brake MGB, ten forward gears, two reverse gears R1, R2):

| **Transmission speed (operation mode)** | **Gear ratio (example)** | **MGB operation mode** | **C1** | **C2** | **C3** | **C4** | **C5 (43, 47)** | **C6 (45)** |
|---|---|---|---|---|---|---|---|---|
| R2 | -9,06- | Power generation, low speed | | | | X | RI | RI |
| R1 - R2 gearshift | -9,06 ... - 12,41 | Braking (passive torque fill) | | | | X | RI | RI |
| R1 | -12,41 | Boosting/Power generation/Retarding, medium speed | L | | | X | RI | RI |
| Reverse driveaway | -12,41 ... ∞ | Braking | | | | X | RI | RI |
| N | ∞ | Power generation | | | | | RI | RI |
| Engine cranking (wheel brakes or park lock applied) | ∞ | Driving | | | L | | RI | RI |
| Forward driveaway | ∞ ... 12,41 | Braking | | | L | | RI | RI |
| 1st | 12,41 | Boosting/Power generation/Retarding, medium speed | L | | L | | RI | RI |
| 1st - 2nd gearshift | 12,41 ... 9,06 | Braking (passive torque fill) | | | L | | RI | RI |
| 2nd, 1st preselected | 9,06 | Stopped | RI | | L | | RI | RI |
| 2nd, doing preselection | 9,06 | Shaft speed synchronization | RI | | | | RI | RI |
| 2nd, 3rd preselected | 9,06 | Boosting/Power generation/Retarding, high speed | RI | RI | | | RI | RI |
| 2nd - 3rd gearshift | 9,06 ... 6,61 | Braking (passive torque fill) | | RI | | | RI | RI |
| 3rd | 6,61 | Boosting/Power generation/Retarding, medium speed | L | RI | | | RI | RI |
| 3rd - 4th gearshift | 6,61 ... 4,83 | Braking (passive torque fill) | | RI | | | RI | RI |
| 4th, 3rd preselected | 4,83 | Stopped | | RI | RI | | RI | RI |
| 4th, doing preselection | 4,83 | Shaft speed synchronization | | | RI | | RI | RI |
| 4th, 5th preselected | 4,83 | Boosting/Power generation/Retarding, high speed | | L | RI | | RI | RI |
| 4th - 5th gearshift | 4,83 ... 3,52 | Braking (passive torque fill) | | L | | | RI | RI |
| 5th | 3,52 | Boosting/Power generation/Retarding, medium speed | L | L | | | RI | RI |
| 5th - 6th gearshift, range change | 3,52 ... 2,57 | Braking (passive torque fill) | | L | | | S | RI |
| 6th, (low range 6th plus high range 2nd) | 2,57 | Stopped | RI | L | | | L | RI |
| 6th, doing speed preselection | 2,57 | Shaft speed synchronization | RI | | | | L | RI |
| 6th, (high range 3rd plus high range 2nd) | 2,57 | Boosting/Power generation/Retarding, high speed | RI | RI | | | L | RI |
| 6th - 7th gearshift, locking range changer | 2,57 ... 1,88 | Braking (passive torque fill) | | RI | | | L | S |
| 7th | 1,88 | Boosting/Power generation/Retarding, medium speed | L | RI | | | L | L |
| 7th - 8th gearshift | 1,88 ... 1,37 | Braking (passive torque fill) | | RI | | | L | L |
| 8th, 7th preselected | 1,37 | Stopped | | RI | RI | | L | L |
| 8th, doing preselection | 1,37 | Shaft speed synchronization | | | RI | | L | L |
| 8th, 9th preselected | 1,37 | Boosting/Power generation/Retarding, high speed | | L | RI | | L | L |
| 8th - 9th gearshift | 1,37 ... 1 | Braking (passive torque fill) | | L | | | L | L |
| 9th | 1,00 | Boosting/Power generation/Retarding, medium speed | L | L | | | L | L |
| 9th - 10th gearshift | 1 ... 0,73 | Braking (passive torque fill) | | L | | | L | L |
| 10th | 0,73+ | Power generation, low speed | | L | | | L | L |

### Embodiment 6 (Fig. 8, 9)

Shifting table of 6th embodiment of the invention (electric machine brake MGB, ten forward gears, two reverse gears R1, R2):

| **Transmission speed (operation mode)** | **Gear ratio (example)** | **MGB operation mode** | **C1** | **C2** | **C3** | **C4** | **C5 (43, 47)** | **C6 (45)** |
|---|---|---|---|---|---|---|---|---|
| R2 | -8,84- | Power generation, low speed | | | | X | RI | RI |
| R1 - R2 gearshift | -8,84 ... - 13,67 | Braking (passive torque fill) | | | | X | RI | RI |
| R1 | -13,67 | Boosting/Power generation/Retarding, medium speed | L | | | X | RI | RI |
| Reverse driveaway | -13,67 ... ∞ | Braking | | | | X | RI | RI |
| N | ∞ | Power generation | | | | | RI | RI |
| Engine cranking (wheel brakes or park lock applied) | ∞ | Driving | | | L | | RI | RI |
| Forward driveaway | ∞ ... 13,67 | Braking | | | L | | RI | RI |
| 1st | 13,67 | Boosting/Power generation/Retarding, medium speed | L | | L | | RI | RI |
| 1st - 2nd gearshift | 13,67 ... 10,99 | Braking (passive torque fill) | | | L | | RI | RI |
| 2nd | 10,99+ | Power generation, low speed | | | L | | RI | RI |
| 2nd - 3rd gearshift | 10,99 ... 8,84 | Driving at negative speed (active torque fill) | | | L | | RI | RI |
| 3rd, 2nd preselected | 8,84 | Boosting/Power generation/Retarding, medium negative speed | RI | | L | | RI | RI |
| 3rd, doing preselection | 8,84 | Shaft speed synchronization | RI | | | | RI | RI |
| 3rd, 4th preselected | 8,84 | Boosting/Power generation/Retarding, high speed | RI | RI | | | RI | RI |
| 3rd - 4th gearshift | 8,84 ... 7,11 | Braking (passive torque fill) | | RI | | | RI | RI |
| 4th | 7,11 | Boosting/Power generation/Retarding, medium speed | L | RI | | | RI | RI |
| 4th - 5th gearshift | 7,11 ... 5,72 | Braking (passive torque fill) | | RI | | | RI | RI |
| 5th | 5,72+ | Power generation, low speed | | RI | | | RI | RI |
| 5th - 6th gearshift | 5,72 ... 4,6 | Driving at negative speed (active torque fill) | | RI | | | RI | RI |
| 6th, 5th preselected | 4,60 | Boosting/Power generation/Retarding, medium negative speed | | RI | RI | | RI | RI |
| 6th, doing preselection | 4,60 | Shaft speed synchronization | | | RI | | RI | RI |
| 6th, 7th preselected | 4,60 | Boosting/Power generation/Retarding, high speed | | L | RI | | RI | RI |
| 6th - 7th gearshift | 4,6 ... 3,7 | Braking (passive torque fill) | | L | | | RI | RI |
| 7th | 3,70 | Boosting/Power generation/Retarding, medium speed | L | L | | | RI | RI |
| 7th - 8th gearshift | 3,7 ... 2,97 | Braking (passive torque fill) | | L | | | RI | RI |
| 8th | 2,97+ | Power generation, low speed | | L | | | RI | RI |
| 8th - 9th gearshift, range change | 2,97 ... 2,39 | Driving at negative speed (active torque fill) | | L | | | S | RI |
| 9th (low range 8th plus high range 3rd) | 2,39 | Boosting/Power generation/Retarding, medium negative speed | RI | L | | | L | RI |
| 9th, doing speed preselection | 2,39 | Shaft speed synchronization | RI | | | | L | RI |
| 9th (high range 4th plus high range 3rd) | 2,39 | Boosting/Power generation/Retarding, high speed | RI | RI | | | L | RI |
| 9th - 10th gearshift, locking range changer | 2,39 ... 1,92 | Braking (passive torque fill) | | RI | | | L | S |
| 10th | 1,92 | Boosting/Power generation/Retarding, medium speed | L | RI | | | L | L |
| 10th - 11th gearshift | 1,92 ... 1,55 | Braking (passive torque fill) | | RI | | | L | L |
| 11th | 1,55+ | Power generation, low speed | | RI | | | L | L |
| 11th - 12th gearshift | 1,55 ... 1,24 | Driving at negative speed (active torque fill) | | RI | | | L | L |
| 12th, 11th preselected | 1,24 | Boosting/Power generation/Retarding, medium negative speed | | RI | RI | | L | L |
| 12th, doing preselection | 1,24 | Shaft speed synchronization | | | RI | | L | L |
| 12th, 13th preselected | 1,24 | Boosting/Power generation/Retarding, high speed | | L | RI | | L | L |
| 12th - 13th gearshift | 1,24 ... 1 | Braking (passive torque fill) | | L | | | L | L |
| 13th | 1,00 | Boosting/Power generation/Retarding, medium speed | L | L | | | L | L |
| 13th - 14th gearshift | 1 ... 0,8 | Braking (passive torque fill) | | L | | | L | L |
| 14th | 0,80+ | Power generation, low speed | | L | | | L | L |

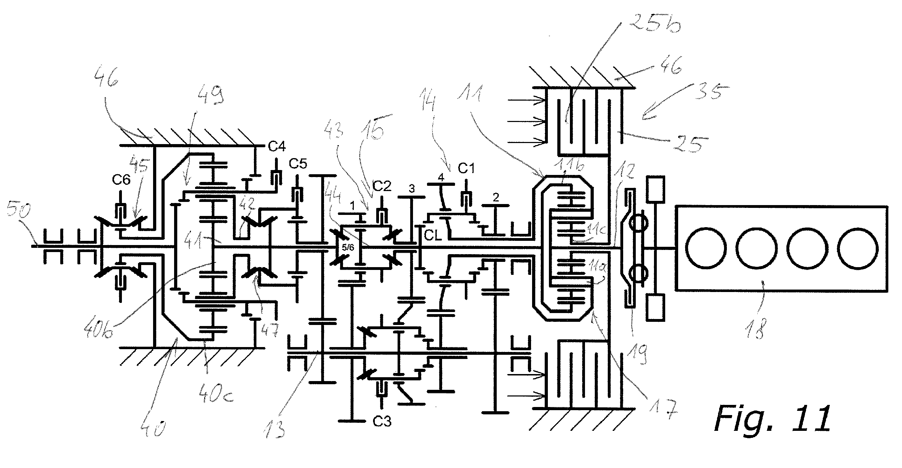

### Embodiment 7 (Fig. 10, 11)

Shifting table of 7th embodiment of the invention (friction brake, ten forward gears, six reverse gears R1, R2, R3, R4, R5, R6):

| **Transmission speed (operation mode)** | **Gear ratio (example)** | **brake operation mode** | **C1** | **C2 (43)** | **C3** | **C4 (49)** | **C5 (47)** | **C6 (45)** |
|---|---|---|---|---|---|---|---|---|
| R6 | -1,84 | Locked | | L | | RI | RI | L |
| R5 - R6 gearshift | -1,84 ... - 2,52 | Braking (passive torque fill) | | L | | RI | RI | L |
| R5 | -2,52 | Open, medium speed | L | L | | RI | RI | L |
| R4 - R5 gearshift | -2,52 ... - 3,46 | Braking (passive torque fill) | | L | | RI | RI | L |
| R4, R5 preselected | -3,46 | Open, high speed | | L | RI | RI | RI | L |
| R4, doing speed preselection | -3,46 | Open or synchronizer assistance (for downshift) | | S | RI | RI | RI | L |
| R4, R3 preselected | -3,46 | Open, stopped | | RI | RI | RI | RI | L |
| R3 - R4 gearshift | -3,46 ... - 4,73 | Braking (passive torque fill) | | RI | | RI | RI | L |
| R3 | -4,73 | Open, medium speed | L | RI | | RI | RI | L |
| R2 - R3 gearshift | -4,73 ... - 6,49 | Braking (passive torque fill) | | RI | | RI | RI | L |
| R2, R3 preselected | -6,49 | Open, high speed | RI | RI | | RI | RI | L |
| R2, doing speed preselection | -6,49 | Open or synchronizer assistance (for downshift) | RI | S | S | RI | RI | L |
| R2, R1 preselected | -6,49 | Open, stopped | RI | | L | RI | RI | L |
| R1 - R2 gearshift | -6,49 ... - 8,89 | Braking (passive torque fill) | | | L | RI | RI | L |
| R1 | -8,89 | Open, medium speed | L | | L | RI | RI | L |
| Reverse driveaway | -8,89 ... ∞ | Braking | | | L | RI | RI | L |
| N | ∞ | Open | | | S | | RI | S |
| Forward driveaway | ∞ ... 12,41 | Braking | | | L | L | RI | RI |
| 1st | 12,41 | Open, medium speed | L | | L | L | RI | RI |
| 1st - 2nd gearshift | 12,41 ... 9,06 | Braking (passive torque fill) | | | L | L | RI | RI |
| 2nd, 1st preselected | 9,06 | Open, stopped | RI | | L | L | RI | RI |
| 2nd, doing preselection | 9,06 | Open or synchronizer assistance (for downshift) | RI | S | S | L | RI | RI |
| 2nd, 3rd preselected | 9,06 | Open, high speed | RI | RI | | L | RI | RI |
| 2nd - 3rd gearshift | 9,06 ... 6,61 | Braking (passive torque fill) | | RI | | L | RI | RI |
| 3rd | 6,61 | Open, medium speed | L | RI | | L | RI | RI |
| 3rd - 4th gearshift | 6,61 ... 4,83 | Braking (passive torque fill) | | RI | | L | RI | RI |
| 4th, 3rd preselected | 4,83 | Open, stopped | | RI | RI | L | RI | RI |
| 4th, doing preselection | 4,83 | Open or synchronizer assistance (for downshift) | | S | RI | L | RI | RI |
| 4th, 5th preselected | 4,83 | Open, high speed | | L | RI | L | RI | RI |
| 4th - 5th gearshift | 4,83 ... 3,52 | Braking (passive torque fill) | | L | | L | RI | RI |
| 5th | 3,52 | Open, medium speed | L | L | | L | RI | RI |
| 5th - 6th gearshift, range change | 3,52 ... 2,57 | Braking (passive torque fill) | | L | | L | S | RI |
| 6th, (low range 6th plus high range 2nd) | 2,57 | Open, stopped | RI | L | | L | L | RI |
| 6th, doing speed preselection | 2,57 | Open or synchronizer assistance (for downshift) | RI | S | | L | L | RI |
| 6th, (high range 3rd plus high range 2nd) | 2,57 | Open, high speed | RI | RI | | L | L | RI |
| 6th - 7th gearshift, locking range changer | 2,57 ... 1,88 | Braking (passive torque fill) | | RI | | L | L | S |
| 7th | 1,88 | Open, medium speed | L | RI | | L | L | L |
| 7th - 8th gearshift | 1,88 ... 1,37 | Braking (passive torque fill) | | RI | | L | L | L |
| 8th, 7th preselected | 1,37 | Open, stopped | | RI | RI | L | L | L |
| 8th, doing preselection | 1,37 | Open or synchronizer assistance (for downshift) | | S | RI | L | L | L |
| 8th, 9th preselected | 1,37 | Open, high speed | | L | RI | L | L | L |
| 8th - 9th gearshift | 1,37 ... 1 | Braking (passive torque fill) | | L | | L | L | L |
| 9th | 1,00 | Open, medium speed | L | L | | L | L | L |
| 9th - 10th gearshift | 1 ... 0,73 | Braking (passive torque fill) | | L | | L | L | L |
| 10th | 0,73 | Locked | | L | | L | L | L |

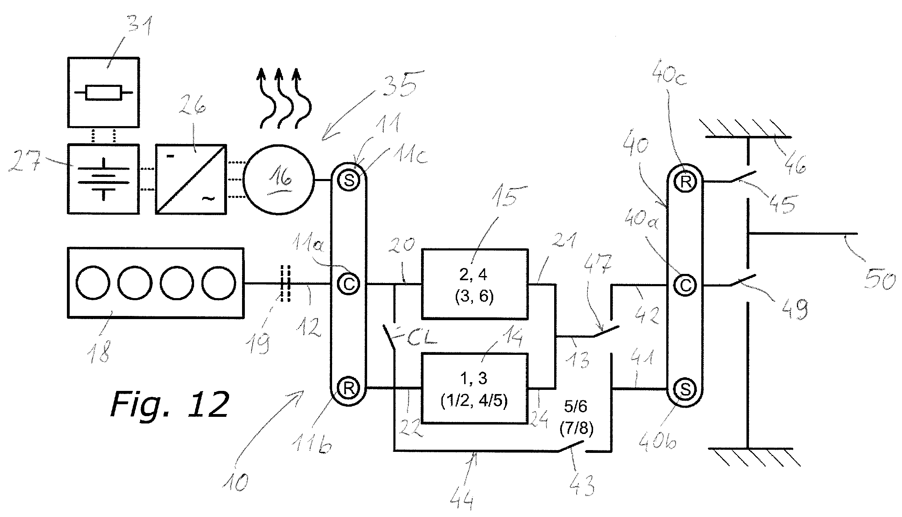

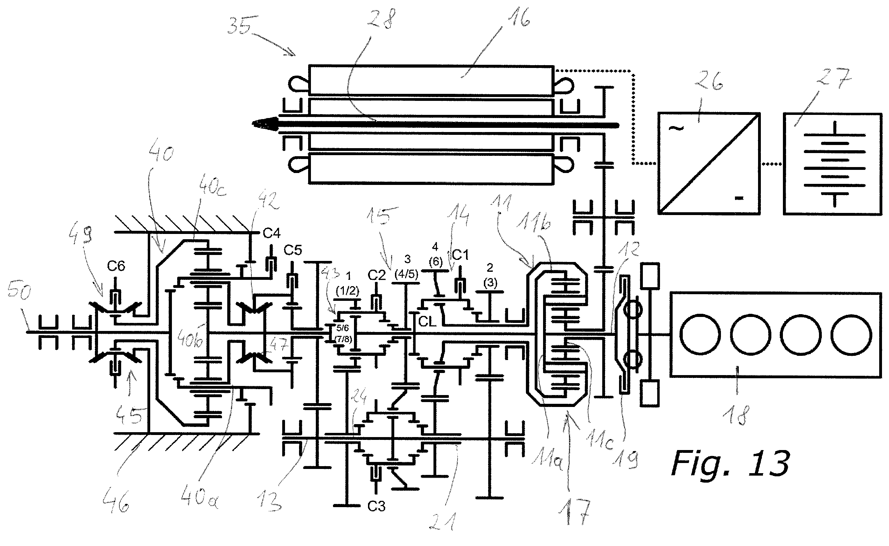

### Embodiment 8 (Fig. 12, 13)

Shifting table of 8th embodiment of the invention (electric machine brake MGB, ten forward gears, six reverse gears R1, R2, R3, R4, R5, R6):

| **Transmission speed (operation mode)** | **Gear ratio (example)** | **MGB operation mode** | **C1** | **C2 (43)** | **C3** | **C4** | **C5 (47)** | **C6 (45, 49)** |
|---|---|---|---|---|---|---|---|---|
| R6 | -1,84- | Power generation, low speed | | L | | RI | RI | L |
| R5 - R6 gearshift | -1,84 ... - 2,52 | Braking (passive torque fill) | | L | | RI | RI | L |
| R5 | -2,52 | Boosting/Power generation/Retarding, medium speed | L | L | | RI | RI | L |
| R4 - R5 gearshift | -2,52 ... - 3,46 | Braking (passive torque fill) | | L | | RI | RI | L |
| R4, R5 preselected | -3,46 | Boosting/Power generation/Retarding, high speed | | L | RI | RI | RI | L |
| R4, doing speed preselection | -3,46 | Shaft speed synchronization | | | RI | RI | RI | L |
| R4, R3 preselected | -3,46 | Stopped | | RI | RI | RI | RI | L |
| R3 - R4 gearshift | -3,46 ... - 4,73 | Braking (passive torque fill) | | RI | | RI | RI | L |
| R3 | -4,73 | Boosting/Power generation/Retarding, medium speed | L | RI | | RI | RI | L |
| R2 - R3 gearshift | -4,73 ... - 6,49 | Braking (passive torque fill) | | RI | | RI | RI | L |
| R2, R3 preselected | -6,49 | Boosting/Power generation/Retarding, high speed | RI | RI | | RI | RI | L |
| R2, doing speed preselection | -6,49 | Shaft speed synchronization | RI | | | RI | RI | L |
| R2, R1 preselected | -6,49 | Stopped | RI | | L | RI | RI | L |
| R1 - R2 gearshift | -6,49 ... - 8,89 | Braking (passive torque fill) | | | L | RI | RI | L |
| R1 | -8,89 | Boosting/Power generation/Retarding, medium speed | L | | L | RI | RI | L |
| Reverse driveaway | -8,89 ... ∞ | Braking | | | L | RI | RI | L |
| N | ∞ | Power generation | | | | | RI | S |
| Engine cranking (wheel brakes or park lock applied) | ∞ | Driving | | | L | L | RI | RI |
| Forward driveaway | ∞ ... 12,41 | Braking | | | L | L | RI | RI |
| 1st | 12,41 | Boosting/Power generation/Retarding, medium speed | L | | L | L | RI | RI |
| 1st - 2nd gearshift | 12,41 ... 9,06 | Braking (passive torque fill) | | | L | L | RI | RI |
| 2nd, 1st preselected | 9,06 | Stopped | RI | | L | L | RI | RI |
| 2nd, doing preselection | 9,06 | Shaft speed synchronization | RI | | | L | RI | RI |
| 2nd, 3rd preselected | 9,06 | Boosting/Power generation/Retarding, high speed | RI | RI | | L | RI | RI |
| 2nd - 3rd gearshift | 9,06 ... 6,61 | Braking (passive torque fill) | | RI | | L | RI | RI |
| 3rd | 6,61 | Boosting/Power generation/Retarding, medium speed | L | RI | | L | RI | RI |
| 3rd - 4th gearshift | 6,61 ... 4,83 | Braking (passive torque fill) | | RI | | L | RI | RI |
| 4th, 3rd preselected | 4,83 | Stopped | | RI | RI | L | RI | RI |
| 4th, doing preselection | 4,83 | Shaft speed synchronization | | | RI | L | RI | RI |
| 4th, 5th preselected | 4,83 | Boosting/Power generation/Retarding, high speed | | L | RI | L | RI | RI |
| 4th - 5th gearshift | 4,83 ... 3,52 | Braking (passive torque fill) | | L | | L | RI | RI |
| 5th | 3,52 | Boosting/Power generation/Retarding, medium speed | L | L | | L | RI | RI |
| 5th - 6th gearshift, range change | 3,52 ... 2,57 | Braking (passive torque fill) | | L | | L | S | RI |
| 6th, (low range 6th plus high range 2nd) | 2,57 | Stopped | RI | L | | L | L | RI |
| 6th, doing speed preselection | 2,57 | Shaft speed synchronization | RI | | | L | L | RI |
| 6th, (high range 3rd plus high range 2nd) | 2,57 | Boosting/Power generation/Retarding, high speed | RI | RI | | L | L | RI |
| 6th - 7th gearshift, locking range changer | 2,57 ... 1,88 | Braking (passive torque fill) | | RI | | L | L | S |
| 7th | 1,88 | Boosting/Power generation/Retarding, medium speed | L | RI | | L | L | L |
| 7th - 8th gearshift | 1,88 ... 1,37 | Braking (passive torque fill) | | RI | | L | L | L |
| 8th, 7th preselected | 1,37 | Stopped | | RI | RI | L | L | L |
| 8th, doing preselection | 1,37 | Shaft speed synchronization | | | RI | L | L | L |
| 8th, 9th preselected | 1,37 | Boosting/Power generation/Retarding, high speed | | L | RI | L | L | L |
| 8th - 9th gearshift | 1,37 ... 1 | Braking (passive torque fill) | | L | | L | L | L |
| 9th | 1,00 | Boosting/Power generation/Retarding, medium speed | L | L | | L | L | L |
| 9th - 10th gearshift | 1 ... 0,73 | Braking (passive torque fill) | | L | | L | L | L |
| 10th | 0,73+ | Power generation, low speed | | L | | L | L | L |

### Embodiment 9 (Fig. 12, 13)

Shifting table of 9th embodiment of the invention (electric machine brake MGB, fourteen forward gears, eight reverse gears R1, R2, R3, R4, R5, R6, R7, R8):

| **Transmission speed (operation mode)** | **Gear ratio (example)** | **MGB operation mode** | **C1** | **C2 (43)** | **C3** | **C4** | **C5 (47)** | **C6 (45, 49**) |
|---|---|---|---|---|---|---|---|---|
| R8 | -2,17 | Power generation, low speed | | L | | RI | RI | L |
| R7 - R8 gearshift | -2,17 ... -2,7 | Braking (passive torque fill) | | L | | RI | RI | L |
| R7 | -2,70 | Boosting/Power generation/Retarding, medium speed | L | L | | RI | RI | L |
| R6 - R7 gearshift | -2,7 ... -3,36 | Braking (passive torque fill) | | L | | RI | RI | L |
| R6, R7 preselected | -3,36 | Boosting/Power generation/Retarding, high speed | | L | RI | RI | RI | L |
| R6, doing speed preselection | -3,36 | Shaft speed synchronization | | | RI | RI | RI | L |
| R6, R5 preselected | -3,36 | Boosting/Power generation/Retarding, medium negative speed | | RI | RI | RI | RI | L |
| R5 - R6 gearshift | -3,36 ... - 4,17 | Driving at negative speed (active torque fill) | | RI | | RI | RI | L |
| R5 | -4,17 | Power generation, low speed | | RI | | RI | RI | L |
| R4 - R5 gearshift | -4,17 ... - 5,19 | Braking (passive torque fill) | | RI | | RI | RI | L |
| R4 | -5,19 | Boosting/Power generation/Retarding, medium speed | L | RI | | RI | RI | L |
| R3 - R4 gearshift | -5,19 ... -6,45 | Braking (passive torque fill) | | RI | | RI | RI | L |
| R3, R4 preselected | -6,45 | Boosting/Power generation/Retarding, high speed | RI | RI | | RI | RI | L |
| R3, doing speed preselection | -6,45 | Shaft speed synchronization | RI | | | RI | RI | L |
| R3, R2 preselected | -6,45 | Boosting/Power generation/Retarding, medium negative speed | RI | | L | RI | RI | L |
| R2 - R3 gearshift | -6,45 ... - 8,02 | Driving at negative speed (active torque fill) | | | L | RI | RI | L |
| R2 | -8,02 | Power generation, low speed | | | L | RI | RI | L |
| R1 - R2 gearshift | -8,02 ... - 9,97 | Braking (passive torque fill) | | | L | RI | RI | L |
| R1 | -9,97 | Boosting/Power generation/Retarding, medium speed | L | | L | RI | RI | L |
| Reverse driveaway | -9,97 ... ∞ | Braking | | | L | RI | RI | L |
| N | ∞ | Power generation | | | | | RI | S |
| Engine cranking (wheel brakes or park lock applied) | ∞ | Driving | | | L | L | RI | RI |
| Forward driveaway | ∞ ... 13,67 | Braking | | | L | L | RI | RI |
| 1st | 13,67 | Boosting/Power generation/Retarding, medium speed | L | | L | L | RI | RI |
| 1st - 2nd gearshift | 13,67 ... 10,99 | Braking (passive torque fill) | | | L | L | RI | RI |
| 2nd | 10,99+ | Power generation, low speed | | | L | L | RI | RI |
| 2nd - 3rd gearshift | 10,99 ... 8,84 | Driving at negative speed (active torque fill) | | | L | L | RI | RI |
| 3rd, 2nd preselected | 8,84 | Boosting/Power generation/Retarding, medium negative speed | RI | | L | L | RI | RI |
| 3rd, doing preselection | 8,84 | Shaft speed synchronization | RI | | | L | RI | RI |
| 3rd, 4th preselected | 8,84 | Boosting/Power generation/Retarding, high speed | RI | RI | | L | RI | RI |
| 3rd - 4th gearshift | 8,84 ... 7,11 | Braking (passive torque fill) | | RI | | L | RI | RI |
| 4th | 7,11 | Boosting/Power generation/Retarding, medium speed | L | RI | | L | RI | RI |
| 4th - 5th gearshift | 7,11 ... 5,72 | Braking (passive torque fill) | | RI | | L | RI | RI |
| 5th | 5,72+ | Power generation, low speed | | RI | | L | RI | RI |
| 5th - 6th gearshift | 5,72 ... 4,6 | Driving at negative speed (active torque fill) | | RI | | L | RI | RI |
| 6th, 5th preselected | 4,60 | Boosting/Power generation/Retarding, medium negative speed | | RI | RI | L | RI | RI |
| 6th, doing preselection | 4,60 | Shaft speed synchronization | | | RI | L | RI | RI |
| 6th, 7th preselected | 4,60 | Boosting/Power generation/Retarding, high speed | | L | RI | L | RI | RI |
| 6th - 7th gearshift | 4,6 ... 3,7 | Braking (passive torque fill) | | L | | L | RI | RI |
| 7th | 3,70 | Boosting/Power generation/Retarding, medium speed | L | L | | L | RI | RI |
| 7th - 8th gearshift | 3,7 ... 2,97 | Braking (passive torque fill) | | L | | L | RI | RI |
| 8th | 2,97+ | Power generation, low speed | | L | | L | RI | RI |
| 8th - 9th gearshift, range change | 2,97 ... 2,39 | Driving at negative speed (active torque fill) | | L | | L | S | RI |
| 9th (low range 8th plus high range 3rd) | 2,39 | Boosting/Power generation/Retarding, medium negative speed | RI | L | | L | L | RI |
| 9th, doing speed preselection | 2,39 | Shaft speed synchronization | RI | | | L | L | RI |
| 9th (high range 4th plus high range 3rd) | 2,39 | Boosting/Power generation/Retarding, high speed | RI | RI | | L | L | RI |
| 9th - 10th gearshift, locking range changer | 2,39 ... 1,92 | Braking (passive torque fill) | | RI | | L | L | S |
| 10th | 1,92 | Boosting/Power generation/Retarding, medium speed | L | RI | | L | L | L |
| 10th - 11th gearshift | 1,92 ... 1,55 | Braking (passive torque fill) | | RI | | L | L | L |
| 11th | 1,55+ | Power generation, low speed | | RI | | L | L | L |
| 11th - 12th gearshift | 1,55 ... 1,24 | Driving at negative speed (active torque fill) | | RI | | L | L | L |
| 12th, 11th preselected | 1,24 | Boosting/Power generation/Retarding, medium negative speed | | RI | RI | L | L | L |
| 12th, doing preselection | 1,24 | Shaft speed synchronization | | | RI | L | L | L |
| 12th, 13th preselected | 1,24 | Boosting/Power generation/Retarding, high speed | | L | RI | L | L | L |
| 12th - 13th gearshift | 1,24 ... 1 | Braking (passive torque fill) | | L | | L | L | L |
| 13th | 1,00 | Boosting/Power generation/Retarding, medium speed | L | L | | L | L | L |
| 13th - 14th gearshift | 1 ... 0,8 | Braking (passive torque fill) | | L | | L | L | L |
| 14th | 0,80+ | Power generation, low speed | | L | | L | L | L |

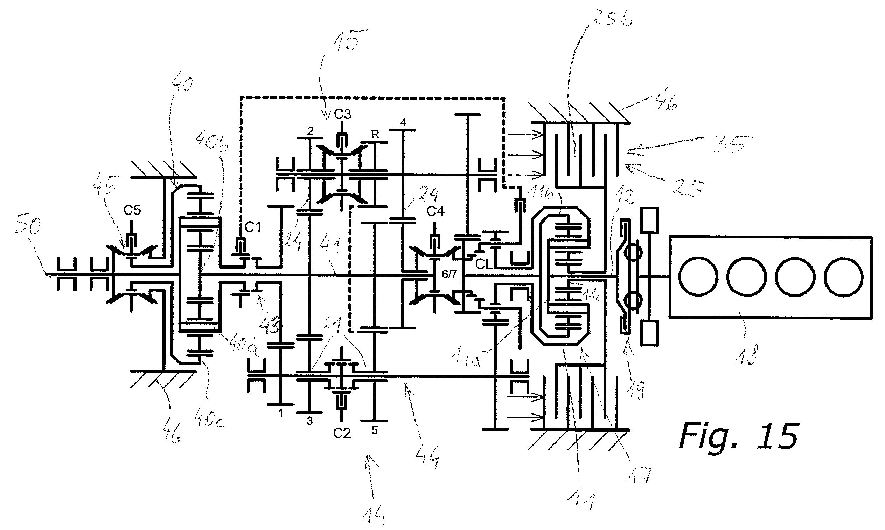

### Embodiment 10 (Fig. 14, 15)

Shifting table of 10th embodiment of the invention (friction brake, twelve forward gears, two reverse gears R1, R2):

| **Transmission speed (operation mode)** | **brake operation mode** | **C1 (43)** | **C2** | **C3** | **C4** | **C5 (45)** |
|---|---|---|---|---|---|---|
| R2 | Locked | | | RI | | RI |
| R1 - R2 gearshift | Braking (passive torque fill) | | | RI | | RI |
| R1 | Open, medium speed | L | | RI | | RI |
| Reverse driveaway | Braking | | | RI | | RI |
| N | Open | L | | S | | RI |
| Forward driveaway | Braking | | | L | | RI |
| 1st | Open, medium speed | L | | L | | RI |
| 1st - 2nd gearshift | Braking (passive torque fill) | | | L | | RI |
| 2nd, 1st preselected | Open, stopped | | L | L | | RI |
| 2nd, doing preselection | Open or synchronizer assistance (for downshift) | | L | S | S | RI |
| 2nd, 3rd preselected | Open, high speed | | L | | L | RI |
| 2nd - 3rd gearshift | Braking (passive torque fill) | | | | L | RI |
| 3rd | Open, medium speed | L | | | L | RI |
| 3rd - 4th gearshift | Braking (passive torque fill) | | | | L | RI |
| 4th, 3rd preselected | Open, stopped | | RI | | L | RI |
| 4th, doing preselection | Open or synchronizer assistance (for downshift) | | RI | | S | RI |
| 4th, 5th preselected | Open, high speed | | RI | | RI | RI |
| 4th - 5th gearshift | Braking (passive torque fill) | | | | RI | RI |
| 5th | Open, medium speed | L | | | RI | RI |
| 5th-6th gearshift | Braking (passive torque fill) | | | | RI | RI |
| 6th (1st bypass and 6/7th at low range) | Open, stopped | RI | | | RI | RI |
| 6th (1st bypass), doing range change and speed preselection | Open or synchronizer assistance (for downshift) | RI | | S | S | S |
| 6th (1st bypass and 2/3th at high range) | Open, high speed | RI | | L | | L |
| 6th-7th gearshift | Braking (passive torque fill) | | | L | | L |
| 7th | Open, medium speed | L | | L | | L |
| 7th - 8th gearshift | Braking (passive torque fill) | | | L | | L |
| 8th, 7th preselected | Open, stopped | | L | L | | L |
| 8th, doing preselection | Open or synchronizer assistance (for downshift) | | L | S | S | L |
| 8th, 9th preselected | Open, high speed | | L | | L | L |
| 8th - 9th gearshift | Braking (passive torque fill) | | | | L | L |
| 9th | Open, medium speed | L | | | L | L |
| 9th - 10th gearshift | Braking (passive torque fill) | | | | L | L |
| 10th, 9th preselected | Open, stopped | | RI | | L | L |
| 10th, doing preselection | Open or synchronizer assistance (for downshift) | | RI | | S | L |
| 10th, 11th preselected | Open, high speed | | RI | | RI | L |
| 10th - 11th gearshift | Braking (passive torque fill) | | | | RI | L |
| 11th | Open, medium speed | L | | | RI | L |
| 11th-12th gearshift | Braking (passive torque fill) | | | | RI | L |
| 12th | Locked | | | | RI | L |

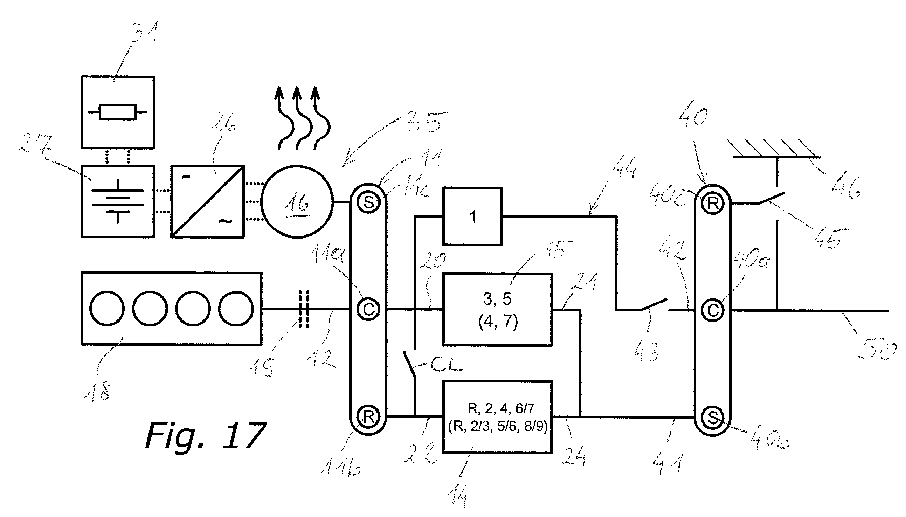

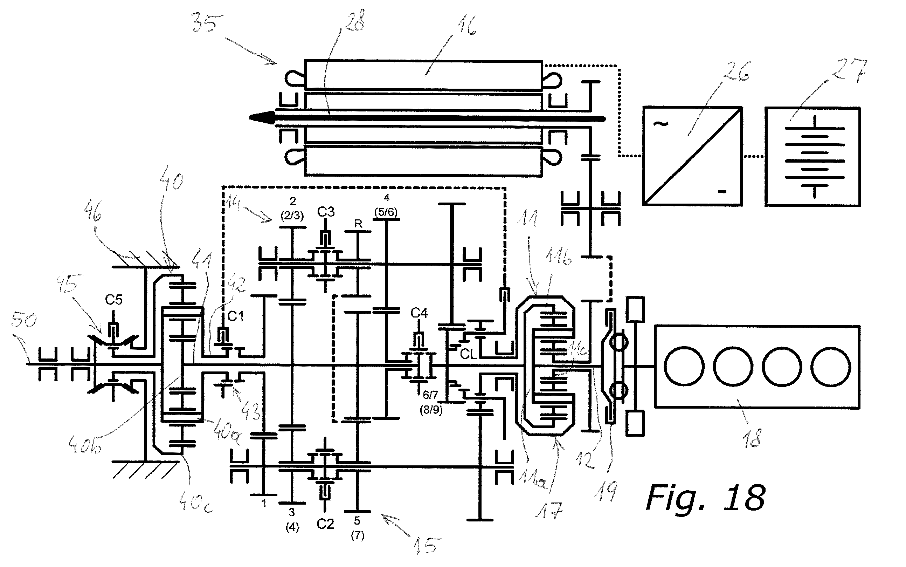

### Embodiment 11 (Fig. 17, 18)

Shifting table of 11th embodiment of the invention (electric machine brake MGB, twelve forward gears, two reverse gears R1, R2):

| **Transmission speed (operation mode)** | **MGB operation mode** | **C1 (43)** | **C2** | **C3** | **C4** | **C5 (45)** |
|---|---|---|---|---|---|---|
| R2 | Power generation, low speed | | | RI | | RI |
| R1 - R2 gearshift | Braking (passive torque fill) | | | RI | | RI |
| R1 | Boosting/Power generation/Retarding, medium speed | L | | RI | | RI |
| Reverse driveaway | Braking | | | RI | | RI |
| N | Power generation | L | | | | RI |
| Engine cranking (wheel brakes or park lock applied) | Driving | | | L | | RI |
| Forward driveaway | Braking | | | L | | RI |
| 1st | Boosting/Power generation/Retarding, medium speed | L | | L | | RI |
| 1st - 2nd gearshift | Braking (passive torque fill) | | | L | | RI |
| 2nd, 1st preselected | Power generation, low speed | | L | L | | RI |
| 2nd, doing preselection | Shaft speed synchronization | | L | | | RI |
| 2nd, 3rd preselected | Boosting/Power generation/Retarding, high speed | | L | | L | RI |
| 2nd - 3rd gearshift | Braking (passive torque fill) | | | | L | RI |
| 3rd | Boosting/Power generation/Retarding, medium speed | L | | | L | RI |
| 3rd - 4th gearshift | Braking (passive torque fill) | | | | L | RI |
| 4th, 3rd preselected | Power generation, low speed | | RI | | L | RI |
| 4th, doing preselection | Shaft speed synchronization | | RI | | | RI |
| 4th, 5th preselected | Boosting/Power generation/Retarding, high speed | | RI | | RI | RI |
| 4th - 5th gearshift | Braking (passive torque fill) | | | | RI | RI |
| 5th | Boosting/Power generation/Retarding, medium speed | L | | | RI | RI |
| 5th-6th gearshift | Braking (passive torque fill) | | | | RI | RI |
| 6th (1st bypass and 6/7th at low range) | Power generation, low speed | RI | | | RI | RI |
| 6th (1st bypass), doing range change and speed preselection | Shaft speed synchronization | RI | | | | S |
| 6th (1st bypass and 2/3th at high range) | Boosting/Power generation/Retarding, high speed | RI | | L | | L |
| 6th-7th gearshift | Braking | | | L | | L |
| 7th | Boosting/Power generation/Retarding, medium speed | L | | L | | L |
| 7th - 8th gearshift | Braking (passive torque fill) | | | L | | L |
| 8th, 7th preselected | Power generation, low speed | | L | L | | L |
| 8th, doing preselection | Shaft speed synchronization | | L | | | L |
| 8th, 9th preselected | Boosting/Power generation/Retarding, high speed | | L | | L | L |
| 8th - 9th gearshift | Braking (passive torque fill) | | | | L | L |
| 9th | Boosting/Power generation/Retarding, medium speed | L | | | L | L |
| 9th - 10th gearshift | Braking (passive torque fill) | | | | L | L |
| 10th, 9th preselected | Power generation, low speed | | RI | | L | L |
| 10th, doing preselection | Shaft speed synchronization | | RI | | | L |
| 10th, 11th preselected | Boosting/Power generation/Retarding, high speed | | RI | | RI | L |
| 10th - 11th gearshift | Braking (passive torque fill) | | | | RI | L |
| 11th | Boosting/Power generation/Retarding, medium speed | L | | | RI | L |
| 11th-12th gearshift | Braking (passive torque fill) | | | | RI | L |
| 12th | Power generation, low speed | | | | RI | L |

### Embodiment 12 (Fig. 17, 18)

Shifting table of 12th embodiment of the invention (electric machine brake MGB, seventeen forward gears, two reverse gears R1, R2):

| **Transmission speed (operation mode)** | **MGB operation mode** | **C1 (43)** | **C2** | **C3** | **C4** | **C5 (45)** |
|---|---|---|---|---|---|---|
| R2 | Power generation, low speed | | | RI | | RI |
| R1 - R2 gearshift | Braking (passive torque fill) | | | RI | | RI |
| R1 | Boosting/Power generation/Retarding, medium speed | L | | RI | | RI |
| Reverse driveaway | Braking | | | RI | | RI |
| N | Power generation | L | | | | RI |
| Engine cranking (wheel brakes or park lock applied) | Driving | | | L | | RI |
| Forward driveaway | Braking | | | L | | RI |
| 1st | Boosting/Power generation/Retarding, medium speed | L | | L | | RI |
| 1st - 2nd gearshift | Braking (passive torque fill) | | | L | | RI |
| 2nd | Power generation, low speed | | | L | | RI |
| 2nd - 3rd gearshift | Driving at negative speed (active torque fill) | | | L | | RI |
| 3rd, 2nd preselected | Boosting/Power generation/Retarding, medium negative speed | | L | L | | RI |
| 3rd, doing preselection | Shaft speed synchronization | | L | | | RI |
| 3rd, 4th preselected | Boosting/Power generation/Retarding, high speed | | L | | L | RI |
| 3rd - 4th gearshift | Braking (passive torque fill) | | | | L | RI |
| 4th | Boosting/Power generation/Retarding, medium speed | L | | | L | RI |
| 4th - 5th gearshift | Braking (passive torque fill) | | | | L | RI |
| 5th | Power generation, low speed | | | | L | RI |
| 5th - 6th gearshift | Driving at negative speed (active torque fill) | | | | L | RI |
| 6th, 5th preselected | Boosting/Power generation/Retarding, medium negative speed | | RI | | L | RI |
| 6th, doing preselection | Shaft speed synchronization | | RI | | | RI |
| 6th, 7th preselected | Boosting/Power generation/Retarding, high speed | | RI | | RI | RI |
| 6th - 7th gearshift | Braking (passive torque fill) | | | | RI | RI |
| 7th | Boosting/Power generation/Retarding, medium speed | L | | | RI | RI |
| 7th-8th gearshift | Braking (passive torque fill) | | | | RI | RI |
| 8th | Power generation, low speed | | | | RI | RI |
| 8th-9th gearshift | Driving at negative speed (active torque fill) | | | | RI | RI |
| 9th (1st bypass and 8/9th at low range) | Boosting/Power generation/Retarding, medium negative speed | RI | | | RI | RI |
| 9th (1st bypass), doing range change and speed preselection | Shaft speed synchronization | RI | | | | S |
| 9th (1st bypass and 2/3th at high range) | Boosting/Power generation/Retarding, high speed | RI | | L | | L |
| 9th- 10th gearshift | Braking (passive torque fill) | | | L | | L |
| 10th | Boosting/Power generation/Retarding, medium speed | L | | L | | L |
| 10th - 11th gearshift | Braking (passive torque fill) | | | L | | L |
| 11th | Power generation, low speed | | | L | | L |
| 11th - 12th gearshift | Driving at negative speed (active torque fill) | | | L | | L |
| 12th, 11th preselected | Boosting/Power generation/Retarding, medium negative speed | | L | L | | L |
| 12th, doing preselection | Shaft speed synchronization | | L | | | L |
| 12th, 13th preselected | Boosting/Power generation/Retarding, high speed | | L | | L | L |
| 12th - 13th gearshift | Braking (passive torque fill) | | | | L | L |
| 13th | Boosting/Power generation/Retarding, medium speed | L | | | L | L |
| 13th - 14th gearshift | Braking (passive torque fill) | | | | L | L |
| 14th | Power generation, low speed | | | | L | L |
| 14th - 15th | Driving at negative speed (active torque fill) | | | | L | L |
| 15th, 14th preselected | Boosting/Power generation/Retarding, medium negative speed | | RI | | L | L |
| 15th, doing preselection | Shaft speed synchronization | | RI | | | L |
| 15th, 16th preselected | Boosting/Power generation/Retarding, high speed | | RI | | RI | L |
| 15th- 16th gearshift | Braking (passive torque fill) | | | | RI | L |
| 16th | Boosting/Power generation/Retarding, medium speed | L | | | RI | L |
| 16th - 17th gearshift | Braking (passive torque fill) | | | | RI | L |
| 17th | Power generation, low speed | | | | RI | L |

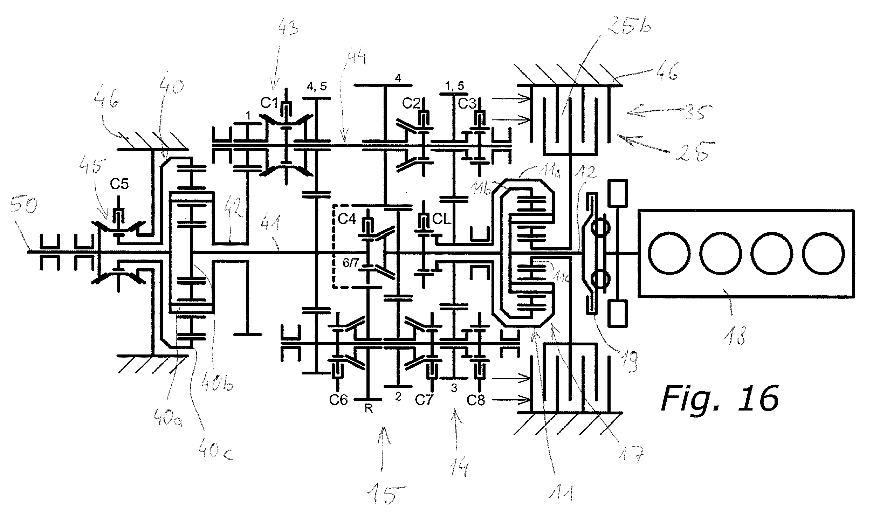

### Embodiment 13 (Fig. 14, 16)

Shifting table of 13th embodiment of the invention (friction brake, twelve forward gears, two reverse gears R1, R2):

| **Transmission speed (operation mode)** | **brake operation mode** | **C1 (43)** | **C2** | **C3** | **C4** | **C5 (45)** | **C6** | **C7** | **C8** | **CL** |
|---|---|---|---|---|---|---|---|---|---|---|
| R2 | Locked | | | | | RI | X | | | |
| R1 - R2 gearshift | Braking (passive torque fill) | | | | | RI | X | | | |
| R1 | Open, medium speed | | | | | RI | X | | | X |
| Reverse driveaway | Braking | | | | | RI | X | | | |
| N | Open | | | | | RI | S | S | | X |
| Forward driveaway | Braking | | | | | RI | | X | | |
| 1st | Open, medium speed | | | | | RI | | X | | X |
| 1st - 2nd gearshift | Braking (passive torque fill) | | | | | RI | | X | | |
| 2nd, 1st preselected | Open, stopped | | | | | RI | | X | X | |
| 2nd, doing preselection | Open or synchronizer assistance (for downshift) | S | S | | | RI | | S | X | |
| 2nd, 3rd preselected | Open, high speed | RI | X | | | RI | | | X | |
| 2nd - 3rd gearshift | Braking (passive torque fill) | RI | X | | | RI | | | | |
| 3rd | Open, medium speed | RI | X | | | RI | | | | X |
| 3rd - 4th gearshift | Braking (passive torque fill) | RI | X | | | RI | | | | |
| 4th, 3rd preselected | Open, stopped | RI | X | X | | RI | | | | |
| 4th, doing preselection | Open or synchronizer assistance (for downshift) | RI | S | X | S | RI | | | | |
| 4th, 5th preselected | Open, high speed | RI | | X | X | RI | | | | |
| 4th - 5th gearshift | Braking (passive torque fill) | S | | | X | RI | | | | |
| 5th | Open, medium speed | | | | X | RI | | | | X |
| 5th-6th gearshift | Braking (passive torque fill) | S | | | X | RI | | | | |
| 6th (1st bypass and 6/7th at low range) | Open, stopped | L | | X | X | RI | | | | |
| 6th (1st bypass), doing range change and speed preselection | Open or synchronizer assistance (for downshift) | L | | X | S | S | | S | | |
| 6th (1st bypass and 2/3th at high range) | Open, high speed | L | | X | | L | | X | | |
| 6th-7th gearshift | Braking (passive torque fill) | S | | | | L | | X | | |
| 7th | Open, medium speed | | | | | L | | X | | X |
| 7th - 8th gearshift | Braking (passive torque fill) | | | | | L | | X | | |
| 8th, 7th preselected | Open, stopped | | | | | L | | X | X | |
| 8th, doing preselection | Open or synchronizer assistance (for downshift) | S | S | | | L | | S | X | |
| 8th, 9th preselected | Open, high speed | RI | X | | | L | | | X | |
| 8th - 9th gearshift | Braking (passive torque fill) | RI | X | | | L | | | | |
| 9th | Open, medium speed | RI | X | | | L | | | | X |
| 9th - 10th gearshift | Braking (passive torque fill) | RI | X | | | L | | | | |
| 10th, 9th preselected | Open, stopped | RI | X | X | | L | | | | |
| 10th, doing preselection | Open or synchronizer assistance (for downshift) | RI | S | X | S | L | | | | |
| 10th, 11th preselected | Open, high speed | RI | | X | X | L | | | | |
| 10th - 11th gearshift | Braking (passive torque fill) | S | | | X | L | | | | |
| 11th | Open, medium speed | | | | X | L | | | | X |
| 11th-12th gearshift | Braking (passive torque fill) | | | | X | L | | | | |
| 12th | Locked | | | | X | L | | | | |

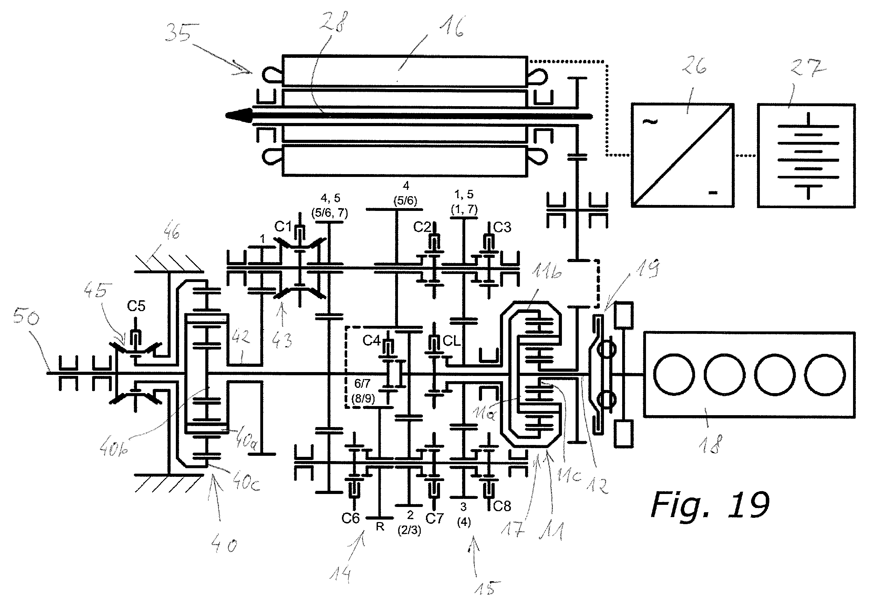

### Embodiment 14 (Fig. 17, 19)

Shifting table of 14th embodiment of the invention (electric machine brake MGB, twelve forward gears, two reverse gears R1, R2):

| **Transmission speed (operation mode)** | **MGB operation mode** | **C1 (43)** | **C2** | **C3** | **C4** | **C5 (45)** | **C6** | **C7** | **C8** | **CL** |
|---|---|---|---|---|---|---|---|---|---|---|
| R2 | Power generation, low speed | | | | | RI | X | | | |
| R1 - R2 gearshift | Braking (passive torque fill) | | | | | RI | X | | | |
| R1 | Boosting/Power generation/Retarding, medium speed | | | | | RI | X | | | X |
| Reverse driveaway | Braking | | | | | RI | X | | | |
| N | Power generation | | | | | RI | | | | X |
| Engine cranking (wheel brakes or park lock applied) | Driving | | | | | RI | | X | | |
| Forward driveaway | Braking | | | | | RI | | X | | |
| 1st | Boosting/Power generation/Retarding, medium speed | | | | | RI | | X | | X |
| 1st - 2nd gearshift | Braking (passive torque fill) | | | | | RI | | X | | |
| 2nd, 1st preselected | Power generation, low speed | | | | | RI | | X | X | |
| 2nd, doing preselection | Shaft speed synchronization | S | | | | RI | | | X | |
| 2nd, 3rd preselected | Boosting/Power generation/Retarding, high speed | RI | X | | | RI | | | X | |
| 2nd - 3rd gearshift | Braking (passive torque fill) | RI | X | | | RI | | | | |
| 3rd | Boosting/Power generation/Retarding, medium speed | RI | X | | | RI | | | | X |
| 3rd - 4th gearshift | Braking (passive torque fill) | RI | X | | | RI | | | | |
| 4th, 3rd preselected | Power generation, low speed | RI | X | X | | RI | | | | |
| 4th, doing preselection | Shaft speed synchronization | RI | | X | | RI | | | | |
| 4th, 5th preselected | Boosting/Power generation/Retarding, high speed | RI | | X | X | RI | | | | |
| 4th - 5th gearshift | Braking (passive torque fill) | S | | | X | RI | | | | |
| 5th | Boosting/Power generation/Retarding, medium speed | | | | X | RI | | | | X |
| 5th-6th gearshift | Braking (passive torque fill) | S | | | X | RI | | | | |
| 6th (1st bypass and 6/7th at low range) | Power generation, low speed | L | | X | X | RI | | | | |
| 6th (1st bypass), doing range change and speed preselection | Shaft speed synchronization | L | | X | | S | | | | |
| 6th (1st bypass and 2/3th at high range) | Boosting/Power generation/Retarding, high speed | L | | X | | L | | X | | |
| 6th-7th gearshift | Braking | S | | | | L | | X | | |
| 7th | Boosting/Power generation/Retarding, medium speed | | | | | L | | X | | X |
| 7th - 8th gearshift | Braking (passive torque fill) | | | | | L | | X | | |
| 8th, 7th preselected | Power generation, low speed | | | | | L | | X | X | |
| 8th, doing preselection | Shaft speed synchronization | S | | | | L | | | X | |
| 8th, 9th preselected | Boosting/Power generation/Retarding, high speed | RI | X | | | L | | | X | |
| 8th - 9th gearshift | Braking (passive torque fill) | RI | X | | | L | | | | |
| 9th | Boosting/Power generation/Retarding, medium speed | RI | X | | | L | | | | X |
| 9th - 10th gearshift | Braking (passive torque fill) | RI | X | | | L | | | | |
| 10th, 9th preselected | Power generation, low speed | RI | X | X | | L | | | | |
| 10th, doing preselection | Shaft speed synchronization | RI | | X | | L | | | | |
| 10th, 11th preselected | Boosting/Power generation/Retarding, high speed | RI | | X | X | L | | | | |
| 10th - 11th gearshift | Braking (passive torque fill) | S | | | X | L | | | | |
| 11th | Boosting/Power generation/Retarding, medium speed | | | | X | L | | | | X |
| 11th-12th gearshift | Braking (passive torque fill) | | | | X | L | | | | |
| 12th | Power generation, low speed | | | | X | L | | | | |

### Embodiment 15 (Fig. 17, 19)

Shifting table of 15th embodiment of the invention (electric machine brake MGB, seventeen forward gears, two reverse gears R1, R2):

| **Transmission speed (operation mode)** | **MGB operation mode** | **C1 (43)** | **C2** | **C3** | **C4** | **C5 (45)** | **C6** | **C7** | **C8** | **CL** |
|---|---|---|---|---|---|---|---|---|---|---|
| R2 | Power generation, low speed | | | | | RI | X | | | |
| R1 - R2 gearshift | Braking (passive torque fill) | | | | | RI | X | | | |
| R1 | Boosting/Power generation/Retarding, medium speed | | | | | RI | X | | | X |
| Reverse driveaway | Braking | | | | | RI | X | | | |
| N | Power generation | | | | | RI | | | | X |
| Engine cranking (wheel brakes or park lock applied) | Driving | | | | | RI | | X | | |
| Forward driveaway | Braking | | | | | RI | | X | | |
| 1st | Boosting/Power generation/Retarding, medium speed | | | | | RI | | X | | X |
| 1st - 2nd gearshift | Braking (passive torque fill) | | | | | RI | | X | | |
| 2nd | Power generation, low speed | | | | | RI | | X | | |
| 2nd - 3rd gearshift | Driving at negative speed (active torque fill) | | | | | RI | | | | |
| 3rd, 2nd preselected | Boosting/Power generation/Retarding, medium negative speed | | | | | RI | | X | X | |
| 3rd, doing preselection | Shaft speed synchronization | S | | | | RI | | | X | |
| 3rd, 4th preselected | Boosting/Power generation/Retarding, high speed | RI | X | | | RI | | | X | |
| 3rd - 4th gearshift | Braking (passive torque fill) | RI | X | | | RI | | | | |
| 4th | Boosting/Power generation/Retarding, medium speed | RI | X | | | RI | | | | X |
| 4th - 5th gearshift | Braking (passive torque fill) | RI | X | | | RI | | | | |
| 5th | Power generation, low speed | RI | X | | | RI | | | | |
| 5th - 6th gearshift | Driving at negative speed (active torque fill) | RI | X | | | RI | | | | |
| 6th, 5th preselected | Boosting/Power generation/Retarding, medium negative speed | RI | X | X | | RI | | | | |
| 6th, doing preselection | Shaft speed synchronization | RI | | X | | RI | | | | |
| 6th, 7th preselected | Boosting/Power generation/Retarding, high speed | RI | | X | X | RI | | | | |
| 6th - 7th gearshift | Braking (passive torque fill) | S | | | X | RI | | | | |
| 7th | Boosting/Power generation/Retarding, medium speed | | | | X | RI | | | | X |
| 7th-8th gearshift | Braking (passive torque fill) | | | | X | RI | | | | |
| 8th | Power generation, low speed | | | | X | RI | | | | |
| 8th-9th gearshift | Driving at negative speed (active torque fill) | S | | | X | RI | | | | |
| 9th (1st bypass and 8/9th at low range) | Boosting/Power generation/Retarding, medium negative speed | L | | X | X | RI | | | | |
| 9th (1st bypass), doing range change and speed preselection | Shaft speed synchronization | L | | X | | S | | | | |
| 9th (1st bypass and 2/3th at high range) | Boosting/Power generation/Retarding, high speed | L | | X | | L | | X | | |
| 9th- 10th gearshift | Braking (passive torque fill) | S | | | | L | | X | | |
| 10th | Boosting/Power generation/Retarding, medium speed | | | | | L | | X | X | X |
| 10th - 11th gearshift | Braking (passive torque fill) | | | | | L | | X | | |
| 11th | Power generation, low speed | | | | | L | | X | | |
| 11th - 12th gearshift | Driving at negative speed (active torque fill) | | | | | L | | X | | |
| 12th, 11th preselected | Boosting/Power generation/Retarding, medium negative speed | | | | | L | | X | X | |
| 12th, doing preselection | Shaft speed synchronization | S | | | | L | | | X | |
| 12th, 13th preselected | Boosting/Power generation/Retarding, high speed | RI | X | | | L | | | X | |
| 12th - 13th gearshift | Braking (passive torque fill) | RI | X | | | L | | | | |
| 13th | Boosting/Power generation/Retarding, medium speed | RI | X | | | L | | | | X |
| 13th - 14th gearshift | Braking (passive torque fill) | RI | X | | | L | | | | |
| 14th | Power generation, low speed | RI | X | | | L | | | | |
| 14th - 15th | Driving at negative speed (active torque fill) | RI | X | | | L | | | | |
| 15th, 14th preselected | Boosting/Power generation/Retarding, medium negative speed | RI | X | X | | L | | | | |
| 15th, doing preselection | Shaft speed synchronization | RI | | X | | L | | | | |
| 15th, 16th preselected | Boosting/Power generation/Retarding, high speed | RI | | X | X | L | | | | |
| 15th- 16th gearshift | Braking (passive torque fill) | S | | | X | L | | | | |
| 16th | Boosting/Power generation/Retarding, medium speed | | | | X | L | | | | X |
| 16th - 17th gearshift | Braking (passive torque fill) | | | | X | L | | | | |
| 17th | Power generation, low speed | | | | X | L | | | | |

In all Figs. speeds in sub-transmissions are listed from 1^{st} (with highest ratio) to highest speed (with lowest ratio). Overall transmission ratio depends on the actual connections to the range changer 40.

## Claims

1. A multi-speed torque filled transmission (10) especially for a vehicle, comprising
a power split device (11) having at least a first link (11a), a second link (11b) and a third link (11c) with a negative speed ratio between the second link (11b) and the third link (11c) when the first link (11a) is stopped, an input shaft (12) of the transmission (10) being connected to the first link (11a) of said power split device (11) and being connected or connectable to a driving shaft of a prime mover (18),
a shiftable first sub-transmission (14) with a first driveshaft (20) and a shiftable second sub-transmission (15) with a second driveshaft (22), each of the sub-transmissions (14, 15) providing a plurality of different gear ratios, wherein the first driveshaft (20) of the first sub-transmission (14) is connected to the first link (11a) of said power split device (11), and the second driveshaft (22) of the second sub-transmission (15) is connected to the second link (11b) of said power split device (11),
an intermediate shaft (13), kinematically connected to a driven shaft (21, 24) of said sub-transmissions (14, 15),
a controllable lock-up clutch (CL) interconnecting any two links (11a, 11b) of said power split device (11),
and at least one passive torque fill device (35), kinematically connected to the third link (11c) of said power split device (11), **characterised in that** the transmission (10) further comprises a planetary range changer (40) with a first input shaft (40a) and a second input shaft (40b), connected or connectable to an output shaft (50) with at least two different gear ratios, wherein said intermediate shaft (13) is connected or connectable to at least one of the input shafts of the planetary range changer (40), and
the transmission further comprises a bypass driveline, kinematically connecting one of the driveshafts of the sub-transmissions to at least another one of the input shafts of the range changer with fixed gear ratio via controllable bypass clutch.

2. The multi-speed transmission (10) according to claim 1, **characterised in that** the first link (11a) of the power split device (11) is a planet carrier (C), the second link (11b) is a ring gear (R), and the third link (11c) is a sun gear (S).

3. The multi-speed transmission (10) according to claim 1 or 2, **characterised in that** each of the two sub-transmissions (14, 15) comprises a plurality of meshing cylindrical gears on parallel shafts, engaged to the shafts by dog clutches and/or synchronizers, wherein said intermediate shaft (13) is arranged coaxial with the driveshafts (20, 22) of said sub-transmissions (14, 15), and one of the speeds is provided by direct connection of one of the driveshafts (20, 22) to the intermediate shaft (13).

4. The multi-speed transmission (10) according to one of the claims 1 to 3, **characterised in that** the intermediate shaft (13) is alternatively connectable to both input shafts (41, 42) of the planetary range changer (40) via at least one controllable clutch (47), and the bypass driveline (44) directly connects the first drive shaft (20) of the first sub-transmission (14) to one of the input shafts (41, 42) of the planetary range changer (40).

5. The multi-speed transmission (10) according to one of the claims 1 to 3, **characterised in that** the intermediate shaft (13) is alternatively connectable to both input shafts (41, 42) of the planetary range changer (40) via at least one controllable clutch (47), and the bypass driveline (44) directly connects the second drive shaft (22) of the second sub-transmission (15) to one of the input shafts (41, 42) of the planetary range changer (40).

6. The multi-speed transmission (10) according to one of the claims 1 to 3, **characterised in that** the intermediate shaft (13) is connected to one of the input shafts (41, 42) of the planetary range changer (40), and the bypass driveline (44) connects the first driveshaft (20) of the first sub-transmission (14) to another input shaft (42, 41) of the planetary range changer (40), wherein the gear ratio of the bypass driveline (44) exceeds highest gear ratio in both sub-transmissions (14, 15).

7. The multi-speed transmission (10) according to one of the claims 1 to 6, **characterised in that** the planetary range changer (40) comprises a sun gear (S), a ring gear (R) and a planet carrier (C), wherein the sun gear (S) of the planetary range changer (40) is connected to the first input shaft (41) of said planetary range changer (40), the ring gear (R) of the planetary range changer (40) is connected to a transmission housing (46), and the planet carrier (C) of the planetary range changer (40) is connected to the second input shaft (42) of said planetary range changer (40) and to the output shaft (50).

8. The multi-speed transmission (10) according to one of the claims 1 to 7, **characterised in that** at least one speed in at least one of the sub-transmissions (14, 15) is a reverse speed.

9. The multi-speed transmission (10) according to one of the claims 1 to 6, **characterised in that** the planetary range changer (40) comprises a sun gear (S), a ring gear (R) and a planet carrier (C), wherein the sun gear (S) of the planetary range changer (40) is connected to the first input shaft (41) of said planetary range changer (40), the ring gear (R) of the planetary range changer (40) is alternatively connectable to a transmission housing (46) and to the output shaft (50) via at least one controllable clutch (45), and the planet carrier (C) of the planetary range changer (40) is connected to the second input shaft (42) of said planetary range changer (40) and to the output shaft (50).

10. The multi-speed transmission (10) according to one of the claims 1 to 6, **characterised in that** the planetary range changer (40) comprises a sun gear (S), a ring gear (R) and a planet carrier (C), wherein the sun gear (S) of the planetary range changer (40) is connected to the first input shaft (41) of said planetary range changer (40), the ring gear (R) of the planetary range changer (40) is alternatively connectable to the transmission housing (46) and to the output shaft (50) via at least one controllable clutch (45), and the planet carrier (C) of the planetary range changer (40) is connected to the second input shaft (42) of said planetary range changer (40) and is alternatively connectable to the transmission housing (46) and to the output shaft (50) via at least one controllable clutch (49).

11. The multi-speed transmission (10) according to one of the claims 1 to 10, **characterised in that** the passive torque fill device (35) is arranged concentrically to the power split device (11) and its rotor is directly connected to the first link of the power split device (11).

12. The multi-speed transmission (10) according to one of the claims 1 to 10, **characterised in that** the passive torque fill device (35) is arranged apart from the power split device (11) and its rotor is connected to the first link (11a) of the power split device (11) via transmission.

13. The multi-speed transmission (10) according to one of the claims 1 to 12, **characterised in that** the prime mover (18) is embodied as internal combustion engine with liquid cooling and the passive torque fill device (35) is embodied as dry friction brake (25a), wherein the static friction components of said brake comprise cooling channels (29), hydraulically connected to the cooling circuit of said internal combustion engine.

14. The multi-speed transmission (10) according to one of the claims 1 to 12, **characterised in that** the passive torque fill device (35) is embodied as multi-plate wet friction brake (25b), wherein the means of liquid cooling of the plates via transmission oil are provided.

15. The multi-speed transmission (10) according to one of the claims 1 to 12, **characterised in that** the passive torque fill device (35) is embodied as hysteresis electric machine (16), wherein the rotor of said hysteresis electric machine comprises at least one channel for liquid cooling.
